# EUROPÄISCHE PATENTSCHRIFT

(11) **EP 1 436 086 B1**
(45) Veröffentlichungstag und Bekanntmachung des Hinweises auf die Patenterteilung: **29.03.2006**
(21) Anmeldenummer: 02800614.6
(22) Anmeldetag: 09.10.2002
(51) Int. Cl.: B01L 3/00, B01L 7/00

(54) **VORRICHTUNG ZUR HALTERUNG EINES SUBSTANZBIBLIOTHEKENTRÄGERS**
DEVICE FOR HOLDING A SUBSTANCE LIBRARY CARRIER
DISPOSITIF DESTINE A MAINTENIR UN SUPPORT DE BIBLIOTHEQUE DE SUBSTANCES

(30) Priorität: 09.10.2001 DE 10149684
(43) Veröffentlichungstag der Anmeldung: 14.07.2004
(73) Patentinhaber: Clondiag Chip Technologies GmbH, 07743 Jena (DE)
(72) Erfinder: SCHULZ, Torsten, 07743 Jena (DE); ERMANTRAUT, Eugen, 07745 Jena (DE); ULLRICH, Thomas, 07743 Jena (DE); ELLINGER, Thomas, 07743 Jena (DE); FISCHER, Joachim, 07778 Porstendorf (DE); KAISER, Thomas, 07743 Jena (DE); MÖBIUS, Klaus-Peter, 07751 Zöllnitz (DE); POSER, Siegfried, 07749 Jena (DE); TUCHSCHEERER, Jens, 07743 Jena (DE); ZEIREN, Martin, 07745 Jena (DE)
(74) Vertreter: Neuefeind, Regina
(86) Internationale Anmeldenummer: PCT/EP2002/011313
(87) Internationale Veröffentlichungsnummer: WO 2003/031063

(56) Entgegenhaltungen:
- WO-A-01/02094
- WO-A-01/25138
- US-B1- 6 167 910
- US-B1- 6 287 850

## Beschreibung

Die Erfindung betrifft eine modular aufgebaute Vorrichtung zur Halterung von Substanzbibliotheken-Trägern und deren Verwendung zum qualitativen und quantitativen Nachweis bestimmter molekularer Zielmoleküle.

Biomedizinische Tests basieren häufig auf dem Nachweis einer Wechselwirkung zwischen einem Molekül, das in bekannter Menge und Position vorhanden ist (der molekularen Sonde) und einem nachzuweisenden, unbekannten Molekül bzw. nachzuweisenden, unbekannten Molekülen (den molekularen Ziel- oder Targetmolekülen). Bei modernen Tests sind die Sonden in Form einer Substanzbibliothek auf Trägem, den so genannten Micro-Arrays oder Chips abgelegt, so dass eine Probe parallel an mehreren Sonden gleichzeitig analysiert werden kann (D. J. Lockhart, E. A. Winzeler, Genomics, gene expression and DNA arrays; Nature 2000, 405, 827-836). Für die Herstellung der Micro-Arrays werden die Sonden dabei üblicherweise in vorgegebener Art und Weise auf einer geeigneten, beispielsweise in WO 00/12575 beschriebenen Matrix immobilisiert (siehe z.B. US 5 412 087, WO 98/36827) bzw. synthetisch erzeugt (siehe z.B. US 5 143 854).

Der Nachweis einer Wechselwirkung zwischen der Sonde und dem Targetmolekül erfolgt dabei folgendermaßen:

Die Sonde bzw. die Sonden werden in vorgegebener Art und Weise an einer bestimmten Matrix in Form eines Micro-Arrays fixiert. Die Targets werden dann in einer Lösung mit den Sonden in Kontakt gebracht und unter definierten Bedingungen inkubiert. Infolge der Inkubation findet zwischen der Sonde und dem Target eine spezifische Wechselwirkung statt. Die dabei auftretende Bindung ist deutlich stabiler als die Bindung von Targetmolekülen an Sonden, die für das Targetmolekül nicht spezifisch sind. Zum Entfernen von Targetmolekülen, die nicht spezifisch gebunden worden sind, wird das System mit entsprechenden Lösungen gewaschen oder erwärmt.

Der Nachweis der spezifischen Wechselwirkung zwischen einem Target und seiner Sonde kann dann durch eine Vielzahl von Verfahren erfolgen, die in der Regel von der Art des Markers abhängt, der vor, während oder nach der Wechselwirkung des Targetmoleküls mit dem Micro-Array in Targetmoleküle eingebracht worden ist. Typischerweise handelt es sich bei solchen Markern um fluoreszierende Gruppen, so dass spezifische Target-Sonden-Wechselwirkungen mit hoher Orts-Auflösung und im Vergleich zu anderen herkömmlichen Nachweismethoden (v.a. massensensitive Methoden) mit geringem Aufwand fluoreszenzoptisch ausgelesen werden können (A. Marshall, J. Hodgson, DNA chips: An array of possibilities, Nature Biotechnology 1998, 16, 27-31; G. Ramsay, DNA Chips: State of the art, Nature Biotechnology 1998, 16,, 40-44).

Abhängig von der auf dem Micro-Array immobilisierten Substanzbibliothek und der chemischen Natur der Targetmoleküle können anhand dieses Testprinzips Wechselwirkungen zwischen Nukleinsäuren und Nukleinsäuren, zwischen Proteinen und Proteinen sowie zwischen Nukleinsäuren und Proteinen untersucht werden (zur Übersicht siehe F. Lottspeich, H. Zorbas, 1998 , Bioanalytik, Spektrum Akademischer Verlag, Heidelberg Berlin).

Als Substanzbibliotheken, die auf Micro-Arrays oder Chips immobilisiert werden können, kommen dabei Antikörper-Bibliotheken, Rezeptor-Bibliotheken, PeptidBibliotheken und Nukleinsäure-Bibliotheken in Frage. Die Nukleinsäure-Bibliotheken nehmen die mit Abstand wichtigste Rolle ein.

Es handelt sich dabei um Micro-Arrays, auf denen Desoxyribonukleinsäure- (DNS) Moleküle oder Ribonukleinsäure- (RNS) Moleküle immobilisiert sind. Voraussetzung für die Bindung eines mit einer Fluoreszenzgruppe markierten Targetmoleküls (DNS-Molekül oder RNS-Molekül) an eine Nukleinsäuresonde des Micro-Arrays ist, dass sowohl Targetmolekül als auch Sondenmolekül in Form einer einzelsträngigen Nukleinsäure vorliegen.

Nur zwischen solchen Molekülen kann eine effiziente und spezifische Hybridisierung stattfinden. Einzelsträngige Nukleinsäureziel- und Nukleinsäuresondenmoleküle erhält man in der Regel durch Hitzedenaturierung und optimal zu wählende Parameter (Temperatur, Ionenstärke, Konzentration helixdestabilisierender Moleküle), was gewährleistet, dass nur Sonden mit nahezu perfekt komplementären (einander entsprechenden) Sequenzen mit der Zielsequenz gepaart bleiben (A. A. Leitch, T. Schwarzacher, D. Jackson, I. J. Leitch, 1994, In vitro Hybridisierung, Spektrum Akademischer Verlag, Heidelberg Berlin Oxford).

Ein typisches Beispiel für die Verwendung von Micro-Arrays in biologischen Testverfahren ist der Nachweis von Mikroorganismen in Proben in der biomedizinischen Diagnostik. Dabei macht man sich die Tatsache zunutze, dass die Gene für ribosomale RNS (rRNS) ubiquitär verbreitet sind und über Sequenzabschnitte verfiigen, die für die jeweilige Spezies charakteristisch sind. Diese Spezies-charakteristischen Sequenzen werden in Form von einzelsträngigen DNS-Oligonukleotiden auf ein Micro-Array aufgebracht. Die zu untersuchenden Target-DNS-Moleküle werden zunächst aus der zu untersuchenden Probe isoliert und mit fluoreszierenden Markern versehen. Anschließend werden die markierten Target-DNS-Moleküle in einer Lösung mit den auf den Micro-Array aufgebrachten Sonden inkubiert, unspezifisch auftretende Wechselwirkungen werden durch entsprechende Waschschritte entfernt und spezifische Wechselwirkungen durch fluoreszenzoptische Auswertung nachgewiesen. Auf diese Art und Weise ist es möglich mit einem einzigen Test in einer Probe gleichzeitig z. B. mehrere Mikroorganismen nachzuweisen. Die Anzahl der nachweisbaren Mikroorganismen hängt bei diesem Testverfahren theoretisch nur von der Anzahl der spezifischen Sonden ab, die auf dem Micro-Array aufgebracht worden sind.

Zur praktischen Durchführung dieser Tests, werden die Micro-Arrays oder Chips in geschlossenen Kammern fixiert, die über Ein- und Auslässe zum Wechsel der für die Waschschritte und Hybridisierungsschritte notwendigen Flüssigkeiten verfügen. Solche Systeme sind z.B. in US 6 287 850 und PCT/EP00/06103 beschrieben.

Die in US 6 287 850 beschriebene Kammer verfügt über keine Aggregate, mit der die Kammern beheizt oder gekühlt werden kann. Dies wäre jedoch für eine gezielte Steuerung der Hybridisierung wünschenswert. Darüber hinaus ist der Zusammenbau der Reaktionskammer, die den Chip enthält, kompliziert und umfasst mehrere Klebeschritte zum Abdichten der Kammer, wodurch Kontaminationsgefahren entstehen.

In PCT/EP00/06103 sind Kammern beschrieben, die ebenfalls Micro-Arrays enthalten. Diese Kammern können beheizt werden, sie sind jedoch nicht kühlbar. Auch in diesem Falle erfolgt der Aufbau der Kammer durch mehrere Schritte und es sind Klebeschritte zum Abdichten der Kammer notwendig. Die in den genannten Offenbarungen aufgeführten Kammern erlauben daher nur eine begrenzte Beeinflussung von Parametern (Heizen, Kühlen etc.), der Zusammenbau ist kontaminationsempfindlich und die für eine Automatisierung der Nachweisreaktion wünschenswerten Peripherieanschlüsse sind nicht vorhanden bzw. nur unter hohem konstruktivem und kostenträchtigem Aufwand zu erreichen.

Bei vielen Tests in der biomedizinischen Diagnostik tritt das Problem auf, dass vor dem eigentlichen Testverfahren die Targetmoleküle zunächst in ausreichender Form vorhanden sein müssen und damit häufig aus der Probe zunächst vervielfältigt werden müssen. Die Vervielfältigung von DNS-Molekülen geschieht durch die Polymerase-Kettenreaktion (PCR). Für die Vervielfältigung von RNS müssen die RNS-Moleküle durch reverse Transkription in entsprechend komplementäre DNS (cDNS) umgewandelt werden. Diese cDNS kann dann ebenfalls durch die PCR vervielfältigt (amplifiziert) werden. Bei der PCR handelt es sich um eine Labor-Standard-Methode (J. Sambrook, E. F. Fritsch, T. Maniatis, 1989, Molecular Cloning: A laboratory manual, 2nd edition, Cold Spring Harbor, N.Y., Cold Spring Harbor Laboratory Press).

Die Vervielfältigung von DNS durch PCR ist verhältnismäßig schnell, ermöglicht durch miniaturisierte Verfahren einen hohen Probendurchsatz in geringen Ansatzvolumina und ist durch Automatisierung arbeitseffizient. Eine Charakterisierung von Nukleinsäuren durch eine alleinige Vervielfältigung ist jedoch nicht möglich. Vielmehr ist es notwendig, nach der Amplifikation Analysemethoden wie Nukleinsäuresequenzbestimmungen oder elektrophoretische Trenn- und Isolationsverfahren zur Charakterisierung der PCR-Produkte einzusetzen.

Aus den Schriften US 5 716 842, DE 195 19 015A1 und WO 94/05414 sowie US 5 498 392 sind verschiedene miniaturisierbare oder miniaturisierte Verfahren und Geräte (Thermocyler) zur Durchführung der PCR bekannt. Die Integration eines Micro-Arrays bzw. die Integration eines DNS-Chips ist nicht Gegenstand dieser Dokumente.

In den Schriften US 5 716 842, WO 91/16966, WO 92/13967 werden miniaturisierbare oder miniaturisierte Thermocycler vorgestellt, die nach dem Prinzip funktionieren, dass bei ihnen die Probenflüssigkeit kontinuierlich über drei Temperaturzonen gepumpt wird. Die Integration eines DNS-Chips ist bei diesen kontinuierlich arbeitenden Thermocyclern ebenfalls nicht vorgesehen.

Der Nachteil aller o.g. Lösungen ist, dass bei der Online-Detektion nur die Information, ob und gegebenenfalls wie viel Nukleinsäure amplifiziert wurde, erhalten werden kann. Eine weitergehende Charakterisierung der Amplifikationsprodukte ist nicht möglich.

Die US-Patentschrift 5 856 174 offenbart ein System, mit dem es möglich ist, zwischen drei miniaturisierten Kammern hin- und herzupumpen. In einer Kammer dieses Systems erfolgt die PCR, in der nächsten wird eine Aufarbeitungsreaktion durchgeführt und in der dritten werden die Reaktionsprodukte, z.B. an einem DNS-Chip, detektiert. Bei dem miniaturisierten PCR-Gefäß handelt es sich um ein Standardgefäß, wie es hinlänglich in der Literatur beschrieben wurde (S. Poser, T. Schulz, U. Dillner, V. Baier, J.M. Köhler, D. Schimkat, G. Mayer, A. Siebert, Chip elemenent for fast thermocycling, Sensors and Actuators A, 1997, 62672-675). Der Nachteil dieses Systems besteht darin, dass ein kompliziertes, störanfälliges und steuerungstechnisch aufwendiges System einer druckgetriebenen Fluidik aufgebaut werden muss, um die Probenflüssigkeit von der PCR-Kammer in die Detektionskammer zu fördern. Außerdem führt die Trennung von Amplifikation und Detektion zu einer Verlängerung der Gesamtanalysezeit.

In PCT/EP00/06103 ist eine Einheit beschrieben, mit der PCR und Nukleinsäurehybridisierung an einem DNS-Chip als Einkammerreaktion in einer Probenkammer mit integriertem Heizsystem durchgeführt werden. Diese Einheit hat allerdings den Nachteil, dass sie nicht kühlbar ist, dass ein kompliziertes Quadropol-System zur Vermischung der Proben notwendig ist und dass der Aufbau dieser Einheit das Verkleben von Teilen erfordert. Weiterhin ist diese Einheit aufgrund ihrer hohen Fertigungskosten als Einwegprodukt unrentabel.

In RC. Anderson, X. Su, G. J. Bogdan, J. Fenton (A miniature integrated device for automated multistep genetic assays, Nucleic Acids Research, 2000, Vol. 28, No. 12) wird eine fingerdicke Kartusche beschrieben, in der DNS-Aufreinigungsschritte, PCR, eine enzymatische Aufbereitung und Hybridisierung an einem DNS Chip durchgeführt werden können. Die verschiedenen Reaktionen erfolgen dabei in verschiedenen Reaktionskammern. Über eine komplexe Druckluft getriebene Mimik wird die Probenlösung von Reaktionskammer zu Reaktionskammer gepumpt, um die unterschiedlichen Prozessschritte durchzuführen. Der Nachteil dieses Systems ist ein hoher konstruktiver Aufwand zum Aufbau einer druckgetriebenen Fluidik, Störanfälligkeit und fehlende integrierte Heiz- und Kühlaggregate. Darüber hinaus sind nur die PCR und die enzymatische Aufbereitung automatisierbar.

Anhand des aufgeführten Stands der Technik wird deutlich, dass ein großer Bedarf an Geräten besteht, die die vollautomatische Durchführung von Micro-Array basierten Nachweistests ermöglichen. Insbesondere besteht ein Bedarf an Geräten zur Durchführung von Micro-Array basierten Tests, bei denen Parameter wie Temperaturregulation, wie Kühlung und Durchflusssteuerung vollautomatisch steuerbar sind. Weiterhin besteht ein Bedarf an Geräten zur Durchführung von Micro-Array basierten Tests, die es erlauben, für den Test notwendige Komponenten wie die Targetmoleküle an Ort und Stelle z.B. durch PCR zu synthetisieren und ohne manuelle Aufarbeitung die Amplifikationsprodukte direkt in dem Testsystem zu verwenden. Allgemein besteht ein Bedarf an Geräten zur Durchführung von Micro-Array basierten Tests, die sich durch einfache Konstruktion, leichte Handhabbarkeit, Vermeiden von Kontaminationsquellen, reproduzierbare Durchführbarkeit der Tests und niedrige Herstellungskosten auszeichnen.

Der vorliegenden Erfindung liegt somit die Aufgabe zugrunde, eine Vorrichtung zur Verfiigung zu stellen, die die vollautomatisierte und parameterregulierte Durchführung von Micro-Array basierten Tests erlaubt. Eine weitere Aufgabe der vorliegenden Erfindung ist es, eine Vorrichtung zur Verfügung zu stellen, die sich durch einfache Konstruktion, leichte Handhabbarkeit und damit kostengünstige Herstellung auszeichnet. Ferner ist es eine Aufgabe der vorliegenden Erfindung, eine Vorrichtung zur Verfügung zu stellen, die die gleichzeitige Durchführung von PCR und Micro-Array basierten Tests in einem Einkammer-System unter Vermeidung von Kontaminationsquellen erlaubt. Eine weitere Aufgabe der vorliegenden Erfindung ist es, eine Handbefüllstation zum Beladen der Probenkammer, die den Micro-Array enthält, zur Verfügung zu stellen.

Diese und weitere Aufgaben der vorliegenden Erfindung werden durch die Bereitstellung der in den Patentansprüchen angegebenen Gegenstände gelöst. Bevorzugte Ausführungsformen sind in den Unteransprüchen definiert. Dabei werden die Aufgaben erfindungsgemäß dadurch gelöst, dass durch das Zusammenpressen eines Schichtverbundes (400, 300, 200) mittels zweier miteinander fixierbarer Halterelemente (101,102) eine Vorrichtung entsteht (1), die eine optisch durchlässige Kammer (500) enthält, die wiederum eine Dektektionsfäche mit einer Substanzbibliothek aufweist (201) und in der Micro-Array basierte Tests sowie Reaktionen wie die PCR durchgeführt werden können.

Diese Art der Konstruktion und das Wesen der Komponenten des Schichtverbundes, bei denen es sich um ein Bodenelement (400), ein Zwischenelement (300) und ein Deckelelement (200) handelt, sind für vorteilhafte Auswirkungen der entstehenden Kammer (500), die im Folgenden auch als Proben- und Reaktionskammer bezeichnet wird, verantwortlich. Die gesamte Vorrichtung (1) wird im Folgenden auch als Kartusche (1) bezeichnet.

Die erfindungsgemäße Konstruktion der Kartusche (1) und der Reaktionskammer (500) ermöglicht es, Kartuschen (1) und Reaktionskammern (500) herzustellen, bei denen ohne großen Aufwand der Substanzbibliothekenträger ausgewechselt werden kann. Ein weiterer Vorteil dieses Konstruktionsprinzips ist, dass die entstehende Reaktionskammer (500) dicht ist, ohne geklebt werden zu müssen, was im Vergleich zu herkömmlicher Assemblierung der Reaktionskammer (500) im Stand der Technik mehrere Arbeitsschritte spart. Damit ist die erfindungsgemäße Vorrichtung als solche günstiger, zusätzlich wird eine potentielle Kontaminationen des Probenraums durch die Klebeschritte verhindert. Diese und andere vorteilhafte Eigenschaften der entstehenden Reaktionskammer (500) beruhen auf dem Wesen der die Reaktionskammer bildenden Boden-, Zwischen- und Deckelelemente.

Als Deckelelement (200) wird gemäß der Erfindung ein Trägerelement bezeichnet (202), das auf einer Detektionsfläche eine Substanzbibliothek aufweist (201) und das mindestens im Bereich der Detektionsfläche optisch durchlässig und nicht fluoreszierend ist. Unter Detektionsfläche ist der Bereich des Trägerelements (202) zu verstehen, auf dem die Substanzbibliothek (201) immobilisiert ist. In einer solchen bevorzugten Ausführungsform der Erfindung ist die Substanzbibliothek (201) dann direkt auf dem Deckelelement (200) aufgebracht.

In anderen bevorzugten Ausführungsformen ist die Substanzbibliothek (201) auf einem optisch durchlässigen, nicht fluoreszierenden Chip aufgebracht, der wiederum fest mit dem Trägerelement (202), das mindestens in dem durch den Chip definiertem Detektionsbereich optisch durchlässig und nicht fluoreszierend ist, verbunden ist. Die Dimensionen des Chips sind dabei kleiner als die Dimensionen des Trägerelements (202). In diesem Fall bilden der die Substanzbibliothek (201) tragende Chip und das Trägerelement (202) zusammen das Deckelelement (200).

Das Trägerelement (202) besteht aus optisch durchlässigen, nicht fluoreszierenden Materialien. Bei den Materialien handelt es sich vorzugsweise um Glas, Borofloat 33 (Schott), Quarzglas, einkristallines CaF₂ (Schott), einkristallines Silizium, Phenylnaethylxnethacrylat und/oder Polycarbonat.

Ist die Substanzbibliothek nicht direkt auf dem Trägerelement (202), sondern auf einem Chip aufgebracht, besteht der Chip ebenfalls aus optisch durchlässigen, nicht fluoreszierenden Materialien. Bei den Materialien handelt es sich vorzugsweise um Glas, Borofloat 33 (von Schott erhältlich), Quarzglas, einkristallines CaF₂ (von Schott erhältlich), einkristallines Silizium, Phenylinethylmethacrylat und/oder Polycarbonat.

Die Substanzbibliothek kann sich auch auf dem Bodenelement (400) befinden. Dem Fachmann ist klar, dass in diesem Fall das Deckelelement (200) aus einem Trägerelement (202) besteht, das einen Bereich aufweist, dessen Position, Größe und Form durch die Position, Größe und Form der Substanzbibliothek (201) auf dem Bodenelement (400) definiert ist. Wenn die Auswertung der Target-Sonden-Wechselwirkung durch optische Nachweisverfahren erfolgt, ist das Deckelelement (200) in diesem Fall mindestens in diesem Bereich optisch durchlässig und nichtfluoreszierend.

Bei den Substanzbibliotheken (201) kann es sich um Proteinsubstanzbibliotheken handeln, um Peptidsubstanzbibliotheken und um Nukleinsäuresubstanzbibliotheken. Bei Proteinsubstanzbibliotheken kann es sich insbesondere um Antikörperbibliotheken, um Rezeptormolekülbibliotheken und um Membranproteinbibliotheken handeln. Bei Peptidbibliotheken kann es sich insbesondere um Rezeptorligandenbibliotheken handeln, es kann sich um pharmakologisch aktive Peptidbibliotheken handeln und um Peptid-Hormonbibliotheken. Bei Nukleinsäuresubstanzbibliotheken kann es sich insbesondere um DNS-Molekülbibliotheken und um RNS-Molekülbibliotheken handeln. Bei DNS-Molekülbibliotheken können insbesondere ribosomale DNS-Sequenzen von Mikroorganismen auf dem Deckelelement (200) aufgebracht sein. Ferner kann es sich Nukleinsäuresubstanzbibliotheken zur SNP-Analyse handeln. Weiterhin kann es sich um Proteinsubstanzbibliotheken oder Nukleinsäuresubstanzbibliotheken handeln, die ein sogenanntes "Expression profiling" erlauben. Es kann sich auch um kombinatorische Substanzbibliotheken handeln.

Die Substanzbibliotheken (201) sind dabei so auf das Trägerelement (202) aufgebracht, dass sie den Probenraum der entstehenden Kammer kontaktieren. Das Deckelelement (200) der entstehenden Reaktionskammer ist damit erfindungsgemäß dadurch gekennzeichnet, dass es auf seiner Unterseite eine Detektionsfläche mit einer Substanzbibliothek aufweist und mindestens in dem Detektionsbereich optisch durchlässig ist.

Eine vorteilhafte Ausgestaltung der Erfindung ist, dass die entstehende Reaktionskammer (500) dicht ist und wässrige Proben auf Temperaturen von bis zu 100°C über Stunden erhitzt werden können, ohne dass es zu einem Austritt von Flüssigkeit kommt oder die Proben verdampfen.

Diese vorteilhaften Wirkungen werden über die dichtenden Materialeigenschaften des Zwischenelements (300) erreicht. Weiterhin ist das Zwischenelement elastisch und wiederholt mit Kanülen durchstechbar, wobei die Kanülen herausziehbar sind und es nach Herausziehen der Kanülen nicht zu einem Flüssigkeitsaustritt aus dem Zwischenelement kommt. Bevorzugt besteht das Zwischenelement aus Polydimethylsiloxan (erhältlich unter den Bezeichnungen Sylgard 184 oder 182), aus Naturkautschuk, Butadien-Kautschuk, Chloropren-Kautschuk, Nitril-Butadien-Kautschuk, Butyl-Kautschuk, Isopren-Styrol-Kautschuk, Polynorbornen-Kautschuk, Ethylen-Propylen-Kautschuk, Fluor-Kautschuk (erhältlich unter den Bezeichnungen Biton, Tecnolflon, Fluorel, Daiel), Perfluor-Kautschuk (erhältlich unter der Bezeichnung Klarez), Methyl-Phenyl-Silicon-Kautschuk, Methyl-Vinyl-Silicon-Kautschuk, Methyl-Fluor-Silicon-Kautschuk, Fluor-Silicon-Kautschuk, Polysulfid-Kautschuk, Urethan-Kautschuk, Polyester- oder Polyetherprepolymeren auf der Basis von 4,4'-Methylendi(phenylisothiocyanat) oder Toluoldüsocyanat (erhältlich unter den Bezeichnungen Adipren, Elastothane, Genthane, Urepan, Vibrathan).

Das Zwischenelement (300) wird im Rahmen der Erfindung auch als Septum bzw. Dichtesepturn bezeichnet.

Das Zwischenelement (300) ist dadurch gekennzeichnet, dass es eine umschlossene Aussparung (301) aufweist. Aufgrund dieser Aussparung (301), die das Volumen des Reaktionsraums (durch 301 gegeben) der Reaktionskammer (500) definiert, kann sowohl die Geometrie als auch das Volumen des Reaktionsraumes variiert werden. Der Reaktionsraum (301) wird im folgenden auch als Probenraum oder Kammerraum bezeichnet.

Vorteilhaft wird durch das Dichteseptum (300) ein Reaktionsraum (301) mit Volumina zwischen 5 und 100 µl, vorteilhafter zwischen 10 und 50 µl oder zwischen 15 und 40 *µ*l, zwischen 15 und 35 µl oder zwischen 15 und 25 µl gebildet.

Abhängig von der Geometrie der Aussparung (301) im Dichteseptum (300) können auf das Deckelelement (200) Substanzbibliotheken (201) in verschiedener geometrischer Anordnung aufgebracht werden. Die Geometrie der Anordnung der Substanzbibliothek (201) ist dabei nur von der Geometrie der Aussparung (301) des Dichteseptums (300) abhängig.

Die vorteilhafte Ausgestaltung des Dichteseptums (300) ermöglicht eine luftblasenfreie Befüllung des Reaktionsraumes (301). Bevorzugt wird die Geometrie des durch das Dichteseptum (300) definierten Reaktionsraumes D-förmig sein, vorteilhaft ist ebenfalls eine Neumond-ähnliche, eine Sichel- ähnliche oder eine Mandarinenstückchen-ähnliche Form.

Eine vorteilhafte Ausgestaltung der Erfindung ist, dass die geometrische Form des Reaktionsraumes durch das Dichteseptum (300) definiert wird und damit ohne konstruktive Änderung der Gesamtvorrichtung (1) geändert werden kann und auf individuelle Problemstellungen angepasst werden kann.

Eine weitere vorteilhafte Ausgestaltung der Erfindung liegt darin, dass die durch das Dichteseptum (300) erzielte Kapselung der Reaktionskammer (500) zum einem die Lagerfähigkeit des Chips erhöht und zum anderen die Kontaminationsgefahr während der Analyse verringert. Eine weitere vorteilhafte Ausgestaltung der Erfindung liegt darin, dass je nach Gestaltung des Dichteseptums (300) Substanzbibliotheken (201) mit unterschiedlichen äußeren geometrischen Abmessungen auf das Deckelelement (200) aufgebracht und verwendet werden können.

Eine weitere vorteilhafte Ausgestaltung der Erfindung besteht darin, dass das Dichteseptum (300) eine Aussparung beliebiger Geometrie (301) aufweist. Vorzugsweise besteht das Dichteseptum (300) aus einem dichtenden, elastischen Material, so dass die Probenkammer durch wiederholtes seitliches Durchstechen des Dichteseptums beladen werden kann, wobei nach Herausziehen der Kanülen, mit denen die Probenkammer beladen wird, das Dichteseptum derart dichtend abschließt, dass keine Flüssigkeit austritt. Das Dichteseptum (300) besteht dabei vorzugsweise aus Materialien wie Polydimethylsiloxan (erhältlich unter den Bezeichnungen Sylgard 184 oder 182), aus Naturkautschuk, Butadien-Kautschuk, Chloropren-Kautschuk, Nitril-Butadien-Kautschuk, Butyl-Kautschuk, Isopren-Styrol-Kautschuk, Polynorbornen-Kautschuk, Ethylen-Propylen-Kautschuk, Fluor-Kautschuk (erhältlich unter den Bezeichnungen Biton, Tecnolflon, Fluorel, Daiel), Perfluor-Kautschuk (erhältlich unter der Bezeichnung Klarez), Methyl-Phenyl-Silicon-Kautschuk, Methyl-Vinyl-Silicon-Kautschuk, Methyl-Fluor-Silicon-Kautschuk, Fluor-Silicon-Kautschuk, Polysulfid-Kautschuk, Urethan-Kautschuk, Polyester- oder Polyetherprepolymeren auf der Basis von 4,4'-Methylendi(phenylisothiocyanat) und Toluoldiisocyanat (erhältlich unter den Bezeichnungen Adipren, Elastothane, Genthane, Urepan, Vibrathan).

Das Bodenelement der Probenkammer (400) ist vorteilhaft so ausgestaltet, dass es über ein integriertes Heizer/Sensorsubstrat verfügt. Bei dem Heiz/Sensorsubstrat handelt es sich im allgemeinen um temperaturregulierende Heizsysteme. Solche Heiz/Sensorsubstrate sind in PCT/EP00/06103 beschrieben.

Das Bodenelement (400) ist dabei mindestens in dem durch die Aussparung des Dichteseptums (300) definierten Probenraumbereich bzw. in dem durch die Detektionsfläche des Deckelelements definierten Bereich optisch durchlässig und nicht fluoreszierend. Vorzugsweise besteht es aus Materialien wie Borofloat 33 (von Schott erhältlich), Quarzglas, einkristallines CaF₂ (von Schott erhältlich) und/oder einkristallinem Silizium. Durch das in das Bodenelement (400) integrierte Heizer/Sensorsubstrat kann die Temperatur in einem Bereich von 0° C bis 100° C, vorzugsweise von 0° C bis 95° C und/oder von 50° C bis 95° C auf +/- 1°C eingestellt werden.

In einer Ausführungsform der Erfindung befindet sich die Substanzbibliothek (201) auf dem Bodenelement (400). Das Bodenelement (400) muss dann ebenfalls in dem Bereich, dessen Größe, Form und Position durch die Detektionsfläche der Substanzbibliothek (201) definiert werden, optisch durchlässig und nicht fluoreszierend sein. Befindet sich die Substanzbibliothek auf einem Chip und ist dieser auf dem Bodenelement (400) befestigt, so muss der Chip optisch transparent und durchlässig sein.

In einer besonderen Ausführungsfonn der Erfindung befindet sich die Substanzbibliothek (201) direkt auf dem Bodenelement (400). Das Bodenelement (400) kann in diesem Fall eine Elektrodenstruktur aufweisen, die es ermöglicht, die Wechselwirkungen der Target-Moleküle mit den Sonden-Molekülen der Substanzbibliothek nicht durch optische Nachweisverfahren, sondern durch elektronische Messgrößen wie Impedanz, Leitfähigkeit, Potential, Kapazität etc. zu erfassen (US 6 013 166, US 628 590, US 6 245 508, US 5 965 452, Tu et al. (2000) Electrophoresis, 21). In diesem Fall müssen weder das Bodenelement (400), noch das Deckelelement (200) in den durch die Substanzbibliothek (201) definierten Bereichen optisch transparent und nicht fluoreszierend sein, können es aber.

Die schichtförmige Reaktionskammer (500), bestehend aus Bodenelement (400), aus Zwischenelement (300) und aus dem Deckelelement (200), wird auch als Kerneinheit bezeichnet (500). Zur Fixierung und Ausrichtung der Kerneinheit werden das Bodenelement (400), das Zwischenelement (300) und das Deckelelement (200) übereinander in Aussparungen (117) gelegt, die in den miteinander in Eingriff bringbaren Halterelementen (101 und 102) angebracht sind.

Durch Zusammenpressen der beiden Halterelemente wird die Kerneinheit bestehend aus Boden-, Zwischen- und Deckelelement dichtend zusammengedrückt. Dazu enthalten die Aussparungen der miteinanderfixierbaren Halterelemente (101 und 102) in einer bevorzugten Ausführungsform Widerlager (118). Das Dichteseptum (300) wird dabei zur Seite gedrückt. Um diesen Prozeß nicht zu behindern, ist das Dichteseptum (300) derart konstruiert, dass es über Dehnfugen (302) verfügt. Um trotz der Dehnfugen (302) ein sicheres Positionieren des Dichteseptums (300) in die Halterelemente (101 und 102) zu gewährleisten, weist das Dichteseptum an seinen Ecken Justierohren (304) auf.

In einer anderen Ausführungsform können Deckelelement (200), Zwischenelement (300) und Bodenelement (400) miteinander verklebt sein.

Um den so entstandenen, hermetisch abgeschlossenen Reaktionsraum (301) totvolumenfrei zu injizieren, werden mindestens zwei in einem definierten Abstand fixierte Kanülen seitlich positionsgenau in das Dichteseptum (300) gestochen. Die Nadeln dringen dann an den Ecken der flachen Seite der D-förmigen Aussparung beziehungsweise an den Ecken der Neumond- förmigen Aussparung in den Reaktionsraum (301) ein. Dadurch hat der Reaktionsraum (301) und damit die Reaktionskammer (500) einen Einlass und einen Auslass. Die Probe wird nun über eine Spritze in die Reaktionskammer (500) befördert. Ebenso kann die Kammer entleert oder die Probenflüssigkeit gegen z.B. einen Spülpuffer ausgetauscht werden.

Die Ausformung des Reaktionsraumes (301) ist fluidisch so entwickelt, dass ein blasenfreies Befüllen mit Probenflüssigkeit hoch reproduzierbar möglich ist. Nach der Befüllung werden die Nadeln wieder herausgezogen, so dass sich die Einstichlöcher in dem elastischen Dichteseptum (300) verschließen und die Probe druckdicht und hermetisch verschlossen in der Reaktionskammer (500) verbleibt. Die gesamte Probenflüssigkeit befindet sich im Reaktionsraum (301) und nicht in Zulauf- oder Ablaufkanälen - weshalb die Kartusche (1) totvolumenfrei arbeitet.

Durch die hermetische Abgeschlossenheit der Reaktionskammer (500) ist die gegen mechanische Beanspruchung empfindliche Substanzbibliothek (201) vor Beschädigung geschützt. Ein weiterer erfindungsgemäßer Vorteil ist, dass bei einem Nachweis von gegen Kontamination hochempfindlichen Substanzen der Reaktionsraum (301) bis zur Analyse mit Schutzsubstanzen, wie Schutzflüssigkeiten und Schutzgasen gefüllt sein kann. Bei solchen Schutzgasen handelt es sich vorzugsweise um Argon, Stickstoff und Inertgase. Besteht die oberflächengebundene Substanzbibliothek z.B. aus RNAse empfindlichen RNS-Molekülen, kann die Probenkammer (500) bis zur Analyse mit RNAse-Inhibitoren (z.B. DEPC-Wasser) geschützt werden. Beim Befüllen mit dem Probenmaterial wird die Schutzsubstanz durch einfaches Verdrängen wieder entfernt.

Des Weiteren können Standardsubstanzen beim Herstellungsprozeß in dem Reaktionsraum 301) vorgelegt werden. Für die PCR würde sich z.B. eine Mischung aus Nukleotiden, Primem, Polymerase und PCR-Puffer eignen.

Eine vorteilhafte Ausführung der Erfindung sieht vor, die Kerneinheit (500) zu kühlen. Dazu können die Halterelemente (101 und 102) Kühlkanäle (105) enthalten, die mit unterschiedlichen Kühlmedien betrieben werden kann. Bei den Kühlmitteln handelt es sich vorzugsweise um Fluor-Kohlenwasserstoffe, R134, Ammoniak, flüchtige Kohlenwasserstoffe wie z. B. Propan, gekühlte Luft, gekühlte Gase wie z. B. flüssiges oder gasförmiges CO₂. Diese vorteilhafte Ausgestaltung erlaubt insbesondere eine präzise Durchführung der PCR.

Durch die Verwendung von z.B. CO₂ oder R134 kann die Probe in der Kartusche auch auf Temperaturen deutlich unterhalb der Raumtemperatur thermostatisiert werden, eine Funktion, die insbesondere bei der Hybridisierungsreaktion wünschenswert ist. In einer vorteilhaften Ausführung der Erfindung werden Kühlmedien auf die Kerneinheit (500) über Kühlmitteleinlässe (112 und 117) und den Kühlmittelauslass (116) geblasen, die entsprechend in die Halterelemente (101 und 102) integriert sind. Durch das Verwenden von z.B. CO₂ oder einem anderen Kühlmittel (R134) kann die Kerneinheit auf Temperaturen unterhalb der Raumtemperatur abgekühlt werden. Durch das Heizer/Sensorsubstrat (400) kann eine Temperatur unterhalb der Raumtemperatur auf +/- 1°C geregelt werden. Der verfügbare Arbeitsbereich der Kartusche beträgt dann - 30°C bis 100°C, bevorzugt 0° C bis 95°C und/oder 50°C bis 95° C.

Eine vorteilhafte Ausführung der Erfindung sieht es vor, dass die beiden miteinanderfixierbaren Halterelemente (101 und 102) zwei ineinandergreifende Halbschalen darstellen. Die miteinander fixierten Halterelemente beziehungsweise die miteinander fixierten Halbschalen bilden zusammen mit der Kerneinheit (500) eine Vorrichtung, die auch als Kartusche bezeichnet wird (1).

Erfindungsgemäß lässt sich die Kartusche von einer Seite aus durch einfaches Übereinanderlegen der verschiedenen Bestandteile, bei denen es sich um das obere Halterelement (101), das Deckelelement (200), das Zwischenelement (300), das Bodenelement (400) und das untere Halterelement (102) handelt, zusammenbauen.

Vorteilhaft ist die Kartusche so gestaltet, dass alle Medienanschlüsse (für Kühlmedien (105) und Heizsystemkontakte (403)) auf einer Seite liegen (120).

Vorteilhaft ist die Kartusche so gestaltet, dass sie auf der Seite, auf der sich die Medienanschlüsse (120) befinden, ebenfalls eine Aussparung (103) aufweist, über die durch die Führung von mindestens zwei Kanülen durch seitliches Einstechen in das Dichteseptum (300) die Reaktionskammer (500) beladen werden kann.

Bei einer vorteilhaften Ausführung der Erfindung ist die Aussparung (103) so konzipiert, dass eine Führungsnase (1103) paßgenau in die Aussparung eingeführt werden kann. Um die Probe in die Reaktionskammer (500) zu injizieren, werden in einer vorteilhaften Ausführung der Erfindung dabei mindestens zwei in einem definierten Abstand fixierte Kanülen mittels einer Führungsnase (1103), die in die Aussparung (103) der Kartusche (1) eingeführt werden kann, und zweier Führungslöcher in der Kartusche (Kanülenfühmng (113)) positionsgenau von der Seite her in das Dichteseptum (300) gestochen. Die Probe wird in den Reaktionsraum (301) der Probenkammer (500) injiziert, ebenso kann die Probenkammer (500) über die zwei Kanülen entleert werden oder die Probenflüssigkeit gegen z.B. ein Spülpuffer ausgetauscht werden.

In einer vorteilhaften Ausgestaltung der Erfindung ist die Kartusche (1) so konzipiert, dass sie auf der Seite der Aussparung (103) und der Medienanschlüsse (120) Schnappverschlüsse (106) aufweist. Dadurch ist es möglich, die Kartusche (1) auf einen beliebigen Stecker definierten Konstruktionstyps (z.B. 1000) zu stecken und sofort alle Medienanschlüsse verfügbar zu haben. Der zu dieser vorteilhaften Ausführung der Erfindung passende Stecker (1000) weist einen Schieber (1100) auf, der die Einstechkanülen (1201) mitsamt der Führungsnase (1103) trägt. Der Schieber (1100) wird über einen Servomotor in die Kartusche (1) gedrückt, um die Probenkammer (500) zur Befüllung oder zur Spülung zu öffnen. Durch Herausziehen des Schiebers (1100) wird die Probenkammer (500) wieder verschlossen.

Über den Stecker (1000) können computergesteuerte externe Geräte wie Pumpen und Ventile für die Befüllung der Kartusche (1) angeschlossen werden. Auch der rechnergesteuerte Temperaturregler wird mit der Kartusche (1) über den Stecker (1000) an die Kontakte des Heizelements (403) angeschlossen. Darüberhinaus kann die computergesteuerte Kühlmittelversorgung über den Stecker (1000) an den dafür vorgesehenen Mediumanschluss (105) der Kartusche (1) angeschlossen werden.

Der Stecker (1000) ist bevorzugt flach und klein konstruiert, um ihn möglichst universell in unterschiedliche Geräte einbauen zu können und verfügt zur Verschraubung und Fixierung über entsprechende Befestigungslöcher (1002) und Paßstiftlöcher (1001).

Darüber hinaus ist der Kühlkanal (1300) aus Isoliermaterial gefertigt, um die Kühlmedien vor Erwärmung zu schützen. Über einen Kühlmittelschlauch (1204) der über einen Kühlmittelanschluss (1205) mit dem isolierten Kühlkanal (1300) verbunden ist, wird das Kühlmittel bei Bedarf in den Kühlkanal (105) gedrückt.

Zur elektrischen Versorgung der Kartusche (1) verfügt der Stecker (1000) über ein Elektrokabel (1206) und einen Elektroanschluss (1207).

Eine vorteilhafte Ausgestaltung der Erfindung erlaubt es, die Kartusche (1) vollautomatisch über den Stecker (1000) zu betreiben.

Der Schieber (1100) wird über Gleitlinearlager (1003) beweglich gelagert, so dass die Führungsnase (1103) in die dafür vorgesehene Aussparung (103) der Kartusche (1) hineingeschoben werden kann. Die Kanülen sind mit Befüllschläuchen (1202) verbunden, über die verschiedene Lösungen in die Probenkammer (500) gepumpt werden können. Um den Schieber elektromechanisch antreiben zu können, verfügt er über eine Schieberschubstange (1210), die mit einem Gewinde (1211) ausgestattet ist, um den Antrieb zu befestigen. Die Schieberschubstange (1210) ist mit einer mechanischen Dämpfung (1212) ausgestattet, um ruckartige Bewegungen des elektromechanischen Antriebs ausgleichen zu können. Dadurch können kostengünstige Antriebe verwendet werden.

Des Weiteren können mehrere dieser Stecker (1000) parallel aufgebaut werden, so dass die gleichzeitige Analyse von mehreren Proben in verschiedenen Kartuschen möglich ist.

In einer vorteilhaften Ausgestaltung der Erfindung ist die Kartusche so konzipiert, dass sie über Passstiftlöcher (108) verfügen, mittels derer sie in einen DNS-Reader positioniert werden kann, so dass ein Anpassen des Bildfeldes oder des Fokuspunktes überflüssig ist.

In einer vorteilhaften Ausführung der Erfindung handelt es sich bei den miteinanderfixierbaren Halterelementen (101 und 102) um zwei ineinandergreifende Halbschalen, die durch einfaches Gegeneinanderpressen mittels Presspassung (115) zusammengehalten werden.

In anderen vorteilhaften Ausführungen der Erfindung sind die beiden Halterelemente (101 und 102) der Kartusche miteinander verschraubt.

In einer weiteren vorteilhaften Ausführung der Erfindung sind die beiden miteinander fixierbaren Halterelemente (101 und 102) so konzipiert, dass sie aus Kunststoff günstig durch Spritzgussverfahren hergestellt werden können und daher kostengünstig sind. Vorzugsweise handelt es sich bei den für die Herstellung der Halterelemente verwendeten Materialien um Polycarbonat-Kunststoffe (z. B. unter der Bezeichnung Makrolon erhältlich), um Polystyrole, die Glasfasern als Zuschlagsstoff enthalten können, um Plexiglas, das gefärbt oder ungefärbt sein kann, oder um SPS GF30 (von der Firma Schulatec erhältlich).

Die Kartusche (1) ist in einer vorteilhaften Ausführung so konzipiert, dass sie nach einmaliger Benutzung weggeworfen werden kann. Damit erübrigt sich jede Form der Reinigung nach ihrer Benutzung.

Die beiden Halterelemente (101 und 102) der Kartusche (1) sind erfindungsgemäß so konstruiert, dass sie ober- und unterhalb der Kerneinheit (500) Sichtfenster aufweisen, so dass die optische Durchlässigkeit der Reaktionskammer gewährleistet ist.

In einer vorteilhaften Ausführung der Erfindung ist die Kartusche so konstruiert, dass auf der der Ausleseoptik zugewandten Seite des Halterelements (101) sich eine Antireflexionsstruktur (109) befindet, die Streulicht unterdrückend wirkt. Diese Struktur hat bevorzugt die Form von parallelen, schmalen Vertiefungen (Riffelung). Andere als Reflexionsstruktur verwendbare Formen sind Noppen, Aufrauhungen oder Pyramidenanordnungen. Durch diese vorteilhafte Eigenschaft der Kartusche (1) können eine Vielzahl optischer Verfahren (Dunkelfeld-, Auflicht-, Schräglicht-, und Durchlicht-Fluoreszenzmessung, konfokale Fluoreszenzmessung, Lumineszenzmessung, Phosphoreszenzmessung, Absorptionsmessung) zur Auswertung der in der Probenkammer untersuchten Wechselwirkung herangezogen werden.

In einer weiteren vorteilhaften Ausführung der Erfindung ist jede Kartusche (1) über eine Datamatrix (600) individuell gekennzeichnet. Dazu wird beim Zusammenbau der Kartusche in einer Datenbank ein Datensatz gespeichert, der neben den Kennwerten für das Heizer/Sensorsubstrat (400) Informationen dazu enthält, wie die eingebaute Substanzbibliothek (201) auszuwerten und wie die Probe in der Kartusche (1) für eine erfolgreiche Diagnose zu behandeln ist. Dieser Datensatz erhält eine Nummer, die in Form der Datamatrix (600) auf der Kartusche angebracht wird. Die in der Datenmatrix (600) verzeichnete Nummer ruft den beim Zusammenbau angelegten Datensatz auf. Anhand der dort festgestellten Protokolle wird die Probe vollautomatisch prozessiert. Dem Nutzer bleibt lediglich die Injizierung der Probe und die Kenntnisnahme des Analyseergebnisses. In einer weiteren vorteilhaften Ausführung der Erfindung kann die Probenkammer (500) manuell über eine Handbefüllstation (2000), die im folgenden auch als Injektor (2000) bezeichnet wird, beladen werden. Diese in Vorrichtung übernimmt nur für die Probeninjektion die Funktion des Steckers und besitzt ebenso wie dieser integrierte Schnellverschlussstecker (210b).

Insbesondere besitzt sie Vertiefungen zum Beladen und Entlüften der Probenkammer (500) der Kartusche (1) sowie Vertiefungen zur Ausnahme der Kartusche (1). Dabei kann es sich vorzugsweise um Vertiefungen zur Aufnahme einer mit Probenflüssigkeit gefüllten Einwegspritze (2401) mit aufgesteckter Kanüle (2402) und einer einzelnen Entlüftungskanüle (2403) handeln, so dass beim Aufstecken der Kartusche (1) die Kanülen zeitgleich in den Reaktionsraum (301) der Probenkammer (500) eindringen. Die Probe kann dann in die Probenkammer (500) der Kartusche (1) injiziert werden, wobei die Entlüftung der Probenkammer (500) über die Entlüflungskanüle (2403) geschieht. Nach Beladen der Probenkammer (500) wird die Kartusche (1) vom Injektor (2000) abgezogen und an den Stecker (1000) zur weiteren Verarbeitung gesteckt. Da es sich bei der Spritze (2401) und den Kanülen (2402 und 2403) um Einwegartikel handelt, wird eine Kontamination des Probenraumes mit unerwünschten Stoffen vermieden.

Die Handbefüllstation (2000) besteht aus zwei Teilen, einem Deckel (2200) und einem Grundkörper (2100), die über die entsprechenden Aussparungen für die Fixierung der erfindungsgemäßen Vorrichtung (1), einer Befülleinheit und einer Entlüftungseinheit verfügen. Bevorzugt handelt es sich bei der Befülleinheit um eine Spritze mit Kanüle (2401 und 2402) und bei der Belüftungseinheit um eine Kanüle (2403). Deckel (2200) und Grundkörper (2100) können durch eine beliebige Vorrichtung miteinander fixiert werden. Vorzugsweise geschieht diese Fixierung durch Magneten.

Die erfindungsgemäße Vorrichtung (1) kann prinzipiell für sämtliche Testverfahren verwendet werden, die auf der spezifischen Wechselwirkung eines Ziel- bzw. Targetmoleküls mit einer auf einem Micro-Array fixierten Sonde beruhen. Dabei kann es sich um Protein-Protein-Wechselwirkungen, um Protein-Nukleinsäure-Wechselwirkungen, und um Nukleinsäure-Nukleinsäure-Wechselwirkungen handeln.

Bevorzugt wird die erfindungsgemäße Vorrichtung (1) für Testverfahren eingesetzt, bei denen es sich um Interaktionsstudien zwischen Proteinen bzw. Peptiden mit einer Antikörperbibliothek, die auf einem Chip fixiert ist, handelt. In einer anderen bevorzugten Anwendung wird die erfindungsgemäße Vorrichtung für Micro-Array basierte Interaktionsstudien zwischen einer Zielnukleinsäure und einer Nukleinsäuresonde benutzt. In einer besonders bevorzugten Verwendung wird die erfindungsgemäße Vorrichtung für den Nachweis von Mikroorganismen in klinischen Proben verwendet.

In einer weiteren besonders bevorzugten Ausführungsform wird die erfindungsgemäße Vorrichtung (1) für den Nachweis der Anwesenheit von DNS-Sequenzen verwendet. Aus dem Nachweis bestimmter DNS-Sequenzen kann beispielsweise die Anwesenheit von Krankheitserregern und deren Resistenzen gegen Therapeutika abgeleitet werden. Besonders bevorzugt ist ebenfalls der Einsatz der Vorrichtung (1) zur Ermittlung des genetischen Zustandes von Zellen oder Organismen wie z.B. der Nachweis von Mutationen, die zu Erbkrankheiten führen (z.B. Mukoviszidose, Phenylketonurie, Infertilität u.ä.) oder der Nachweis von Polymorphismen. Eine ebenfalls bevorzugtes Anwendungsgebiet ist der Nachweis von genetischen Unterschieden, die zur Identifikation von Individuen führen (z.B. Anwendungen im forensischen Bereich, zum Vaterschaftstest u.a.)

Der Nachweis der Wechselwirkung zwischen Sonden und Targete kann generell durch übliche Methoden wie optische Auswertungen unter Verwendung von Fluroeszenzmarkern wie Cy3; Texas Red etc., von radioaktiven Markern oder auch durch chemische Reaktionen wie z.B. Silberfällung erfolgen (WO 98/04740).

Besonders bevorzugt ist ebenfalls die Verwendung der Vorrichtung zum Nachweis des physiologischen Zustandes von Zellen z. B. durch "expression profiling". In diesem Fall wird eine lineare Amplifikation bevorzugt, beispielsweise durch lineare PCR-Amplifikation.

Besonders bevorzugt ist ebenso die Verwendung der Vorrichtung in Verbindung mit anderen Amplifkationsverfahren, die zu ihrer Ausführung ein zyklisches Temperaturregime benötigen, wie zum Beispiel die Ligase-Kettenreaktion (LCR) oder Ligase-Detektionsreaktion (LDR), insbesondere wenn diese mit einer Array-basierten Analyse verknüpft wird.

Die erfindungsgemäße Vorrichtung erlaubt es, Micro-Array basierte Testverfahren vollautomatisch, temperaturgesteuert und durchflussgesteuert zu betreiben. Die erfindungsgemäße Vorrichtung erlaubt es weiterhin, Micro-Array basierte Testverfahren und gleichzeitig eine PCR ohne Aufarbeitung der Zwischenprodukte durchzuführen.

Bevorzugt wird die erfindungsgemäße Vorrichtung verwendet werden, um gleichzeitig Nukleinsäuren durch PCR zu vervielfältigen und die Produkte der PCR durch einen Micro-Array-basierten Test, bei dem als Sonden Nukleinsäuren eingesetzt werden, zu analysieren.

In der erfindungsgemäßen Vorrichtung (1) können auch Reaktionen wie die Ligasen-Kettenreaktion (LCR) und/oder Ligase-Detektionsreaktion (LDR) durchgeführt werden.

Die erfindungsgemäße Konstruktion der Vorrichtung (1) erlaubt es, eine Kartusche, die zur Durchführung von Micro-Array basierten Testverfahren verwendet werden kann, kostengünstig als Einwegartikel herzustellen.

Die folgenden Beispiele dienen der Veranschaulichung der Erfindung, ohne diese in irgendeiner Weise einzuschränken.

### Beispiel 1: PCR

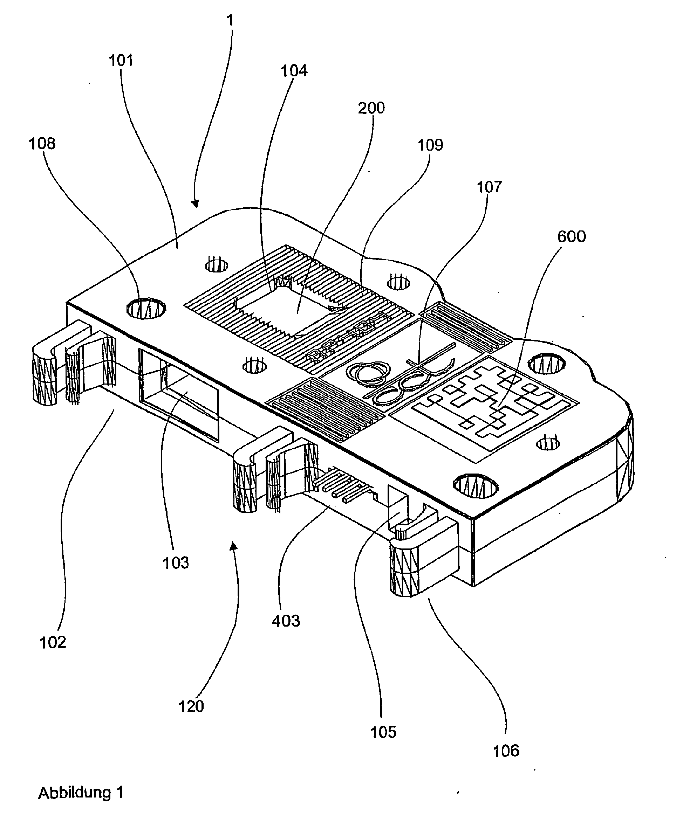

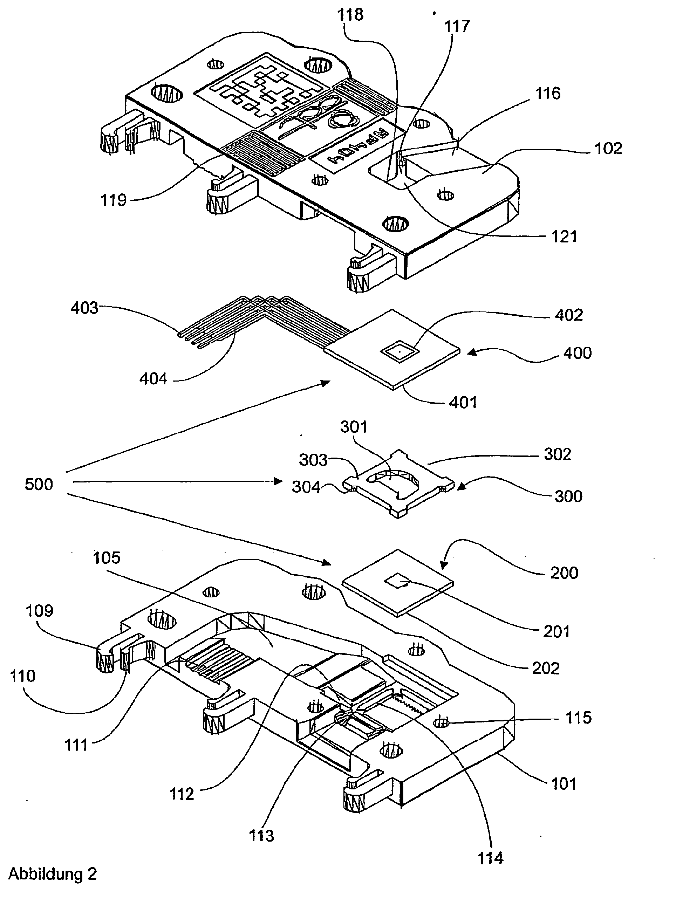

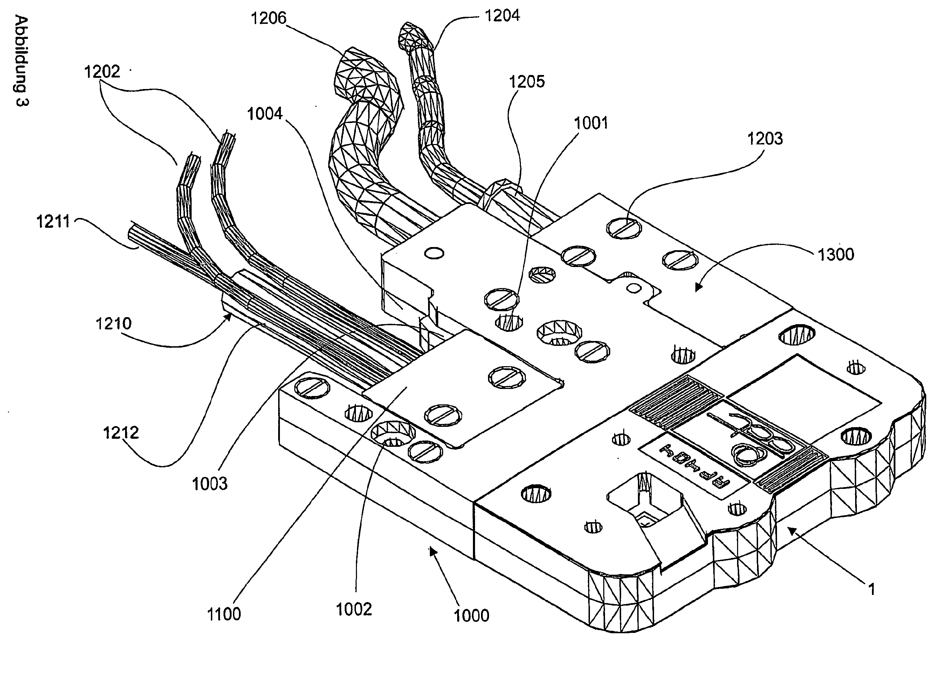

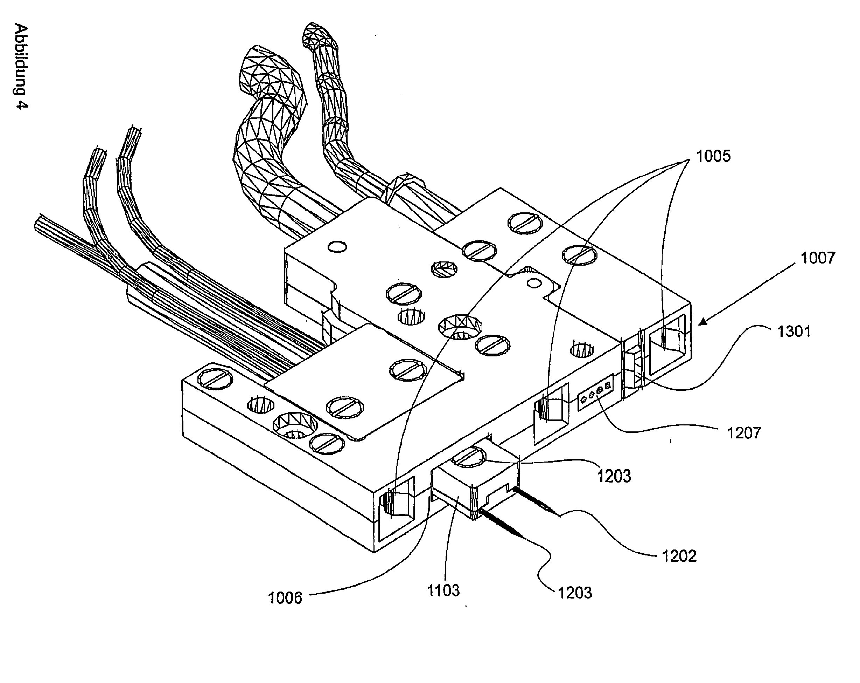

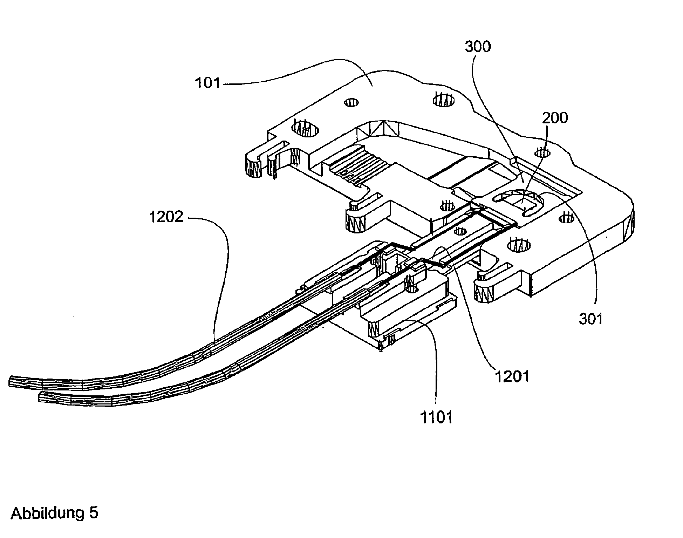

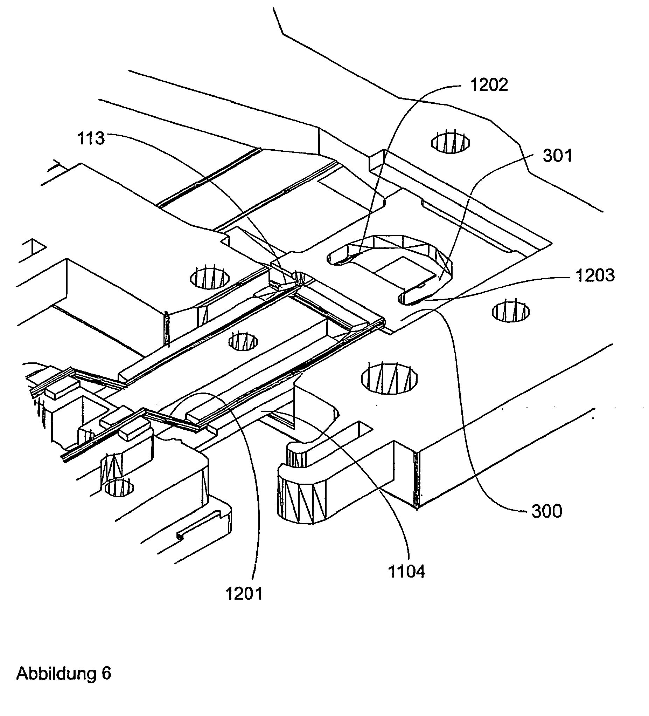

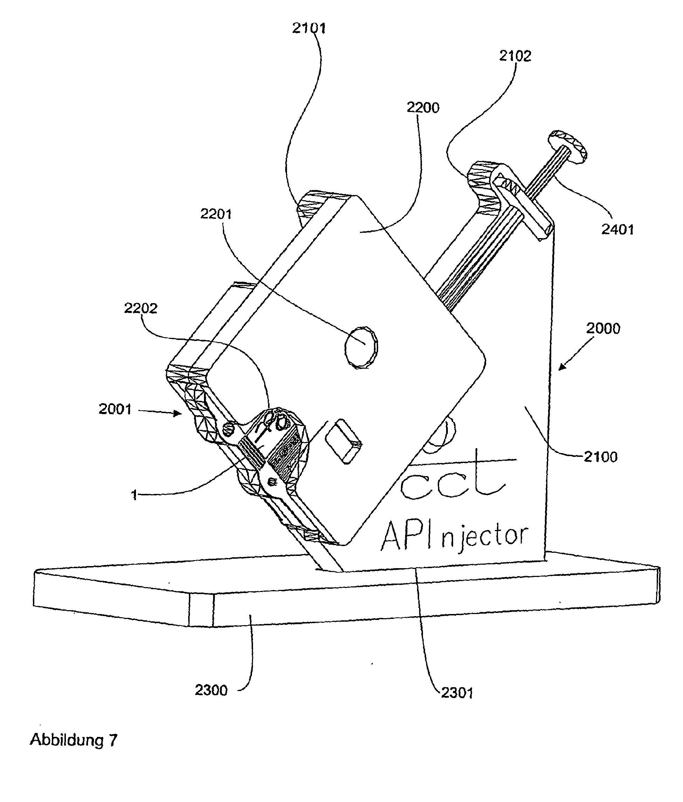

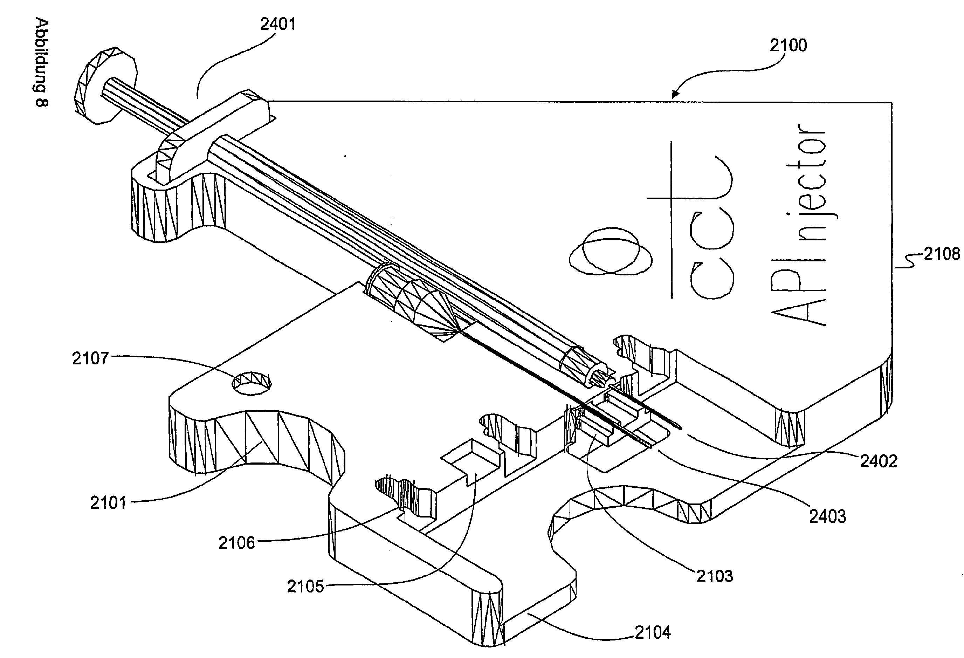

Es wurde eine Kartusche (1) entsprechend der Abbildung 2 zusammengebaut. Dabei wurden alle zu dieser Kartusche gehörigen technischen Daten sowie Protokolle in einer Datenbank abgespeichert. Der Kartusche wurde eine individuelle Nummer zugewiesen, die die automatische Verknüpfung der Kartusche (1) mit dem zugehörigen Datensatz in der Datenbank ermöglicht. Die Nummer wurde als Datamatrix (600) ausgedruckt und auf die Kartusche (1) geklebt.

In eine Injektionsspritze (2401) mit Kanüle (2402) wurde eine PCR-Mischung bestehend aus 1 *µ*l genomischer DNA aus *Corynebacterium glutamicum* (5 pg/*µ*l), 1 *µ*l Primer (AGA GTT TGA TCC TGG CTC AG) (10 pg/*µ*l), 1 *µ*l Primer (TAC CGT CAC CAT AAG GCT TCG TCC CTA) (10 pg/ *µ*l); 1 *µ*l MgCl₂ (25 mM), 5 *µ*l PCR-Puffer, 1 *µ*l 50fach dNTP (10 mM je Base), 0,5 *µ*l Taq-Polymerase (5 Units/*µ*l) und 39,5 *µ*l Wasser aufgezogen.

Injektionsspritze und Entlünungskanüle (2401, 2402 und 2403) wurden in den Grundkörper (2100) des Injektors (2000 gelegt, der Deckel (2200) aufgelegt und die Kartusche (1) in die Kartuschen-Tasche (2001) geschoben. Anschließend wurden 20 *µ*l der PCR-Mischung in die Probenkammer (500) injiziert und die Kartusche (1) dem Injektor (2000) entnommen.

Der verbleibende Rest der PCR-Mischung wurde in Reaktionsröhrchen zur Amplifikation in einem konventionellen Thermocycler gegeben und amplifiziert.

Die Kartusche (1) wurde an den Stecker (1000) gesteckt und die in der Datamatrix (600) codierte individuelle Kartuschen-Nummer ausgelesen und automatisch an das Steuerprogramm übermittelt. Anhand dieser Nummer wurden die technischen Daten, sowie die für die PCR erforderlichen Protokolle aus der Datenbank gelesen. Die technischen Daten zur Temperatursteuerung wurden an den Temperaturregler übermitteltt. Der Schieber (1100) wurde nicht in die Kartusche (1) hineingeschoben, so dass der Reaktionsraum (301) verschlossen blieb. In der Kartusche wurde die PCR durchgeführt. Dabei wurde folgendes Temperaturprotokoll verwendet: Initiale Denaturierung für 240 s bei 45°C. 30 Elongationszyklen mit je 60 s bei 95°C, 60 s bei 58°C und 150 s bei 72°C sowie einer abschließenden Extension von 420 s bei 72°C.

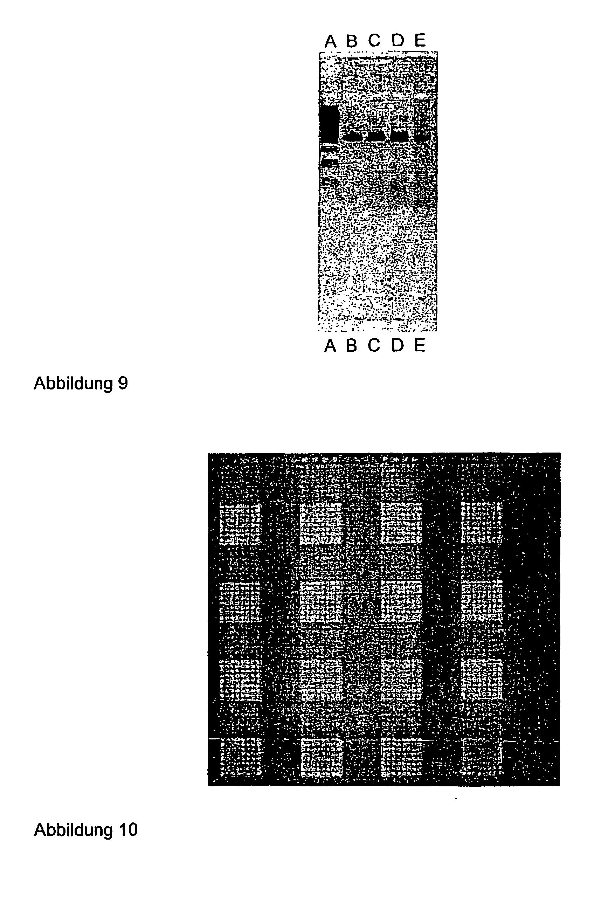

Zur Beschleunigung der Abkühlungszeiten wurde Druckluft als Kühlmedium über den Kühlmittelschlauch und den isolierten Kühlkanal in die Kartusche gepumpt. Im Anschluss an die PCR wurde der Schieber (1000) zur Öffnung der Probenkammer (500) in die Kartusche (1) geschoben und die PCR-Probe herausgepumpt. Die Probe wurde auf ein Elektrophoresegel gegeben, um den Nachweis der Funktionalität der Kartusche zu erbringen. In Abbildung 9 ist der Erfolg des Experiments im Vergleich mit den Ergebnissen im konventionellen Thermocycler dokumentiert.

### Beispiel 2: Hybridisierung und PCR

Es wurde eine Kartusche (1) entsprechend der Abbildung 2 zusammengebaut. Dabei wurden alle zu dieser Kartusche gehörigen technischen Daten sowie Protokolle in einer Datenbank ab gespeichert. Der Kartusche (1) wurde eine individuelle Nummer zugewiesen, die die automatische Verknüpfung der Kartusche (1) mit dem zugehörigen Datensatz in der Datenbank ermöglicht. Die Nummer wurde als Datamatrix (600) ausgedruckt und auf die Kartusche (1) geklebt.

Das in die Kartusche eingebaute Deckelelement (200), das auch als Array bezeichnet wird, trug eine aus 4 unterschiedlichen Sonden bestehende Substanzbibliothek, die in Form eines Schachbrettes auf der Oberfläche angeordnet wurde. Jedes Element des Arrays hat eine Größe von 256x256µm. Jede Sonde wurde redundant, d.h. auf jeweils16 Spots angeordnet. Aufgrund der Oberflächenstruktur weisen die einzelnen Spots eine Rasterung auf. Die DNS-Bibliothek bestand aus der Sequenz P1 (komplementär zum PCR-Fragment) und drei unterschiedlichen Deletionsvarianten:

In eine Injektionsspritze (2401) wurde eine PCR-Mischung aufgezogen, bestehend aus:

5 µl Advantage2 PCR Puffer (Clontech, PaloAlto, USA), 1 µl dNTP Mix 20mM, 1 µl Taq-Polymerase (Advantage2, Clontech, PaloAlto, USA), 1 µl Primer P1 (10pmol/µl) (5' CCTCTGCAGACTACTATTAC 3') (MWG, Ebersberg, Deutschland), 1 µl Primer P2, (10pmol/µl) am 5'-Ende mit dem Fluoreszenzfarbstoff Cyanine 3 gekoppelt (5' CCTGAATTCTTGCTGTGACG 3') (MWG, Ebersberg, Deutschland), 1µl Template 106-mer PCR-Produkt (1 ng/µl) mit der Sequenz 5'CCTCTGCAGACTACTATTACATAATACGACTCACTATAGGGATCTGCAC GTATACTTCTATAGTGTCACCTAAATAGGCAGTCTGTCGTCACAGCAAGA ATTCAGG3', 40 µl entionisiertes Wasser

Injektionsspritze und Entlüftungskanüle (2401, 2402 und 2403) wurden in den Grundkörper des Injektors (2000) gelegt, der Deckel (2200) aufgelegt und die Kartusche (1) in die Kartuschen-Tasche (2001) geschoben. Anschließend wurden 20 µl der PCR-Mischung in die Probenkammer (500) injiziert und die Kartusche (1) dem Injektor (2000) entnommen.

Die Kartusche wurde über den Stecker (1000) kontaktiert, die in der Datamatrix (600) kodierte individuelle Kartuschen-Nummer ausgelesen und automatisch an das Steuerprogramm übermittelt. Anhand dieser Nummer wurden die technischen Daten, sowie die für die PCR erforderlichen Protokolle aus der Datenbank gelesen. Die technischen Daten zur Temperatursteuerung wurden an den Temperaturregler übermittelt. Der Schieber (1100) wurde nicht eingeschoben, so dass der Reaktionsraum (301) der Kartusche (1) verschlossen blieb. In dem Kartusche wurde die PCR durchgeführt, dabei wurde folgendes Temperaturprotokoll verwendet:

Initiale Denaturierung 120 s bei 95°C, 30 Elongationszyklen mit je 35 s bei 95°C, 40 s bei 42°C und 40 s bei 72°C , abschließende Extension von 240 s bei 72°C. Zur Beschleunigung der Abkühlungszeiten wurde Druckluft als Kühlmedium über den Kühlmittelschlauch und den isolierten Kühlkanal in die Kartusche (1) gepumpt.

Im Anschluss an die PCR erfolgte die Hybridisierung des PCR-Produktes an die oberflächengebundene DNS-Bibliothek auf dem DNS-Array. Dazu wurde die Kartusche für 5 min auf 95°C temperiert und anschließend für 1h bei 30°C inkubiert. Um unspezifisch gebundene DNA von der Oberfläche und ungebundene Fluorophore aus der Kartusche zu entfernen, folgte ein Spülprozess. Dazu wurde der Schieber (1100) in die Aussparung (103) der Kartusche (1) geschoben und die PCR-Probe in der Probenkammer (500) durch kontinuierliches Pumpen von 500µlWaschpuffer 1 ( 2xSSC, 0,2%SDS) (Flussrate ca. 0,1ml pro Minute) ersetzt. Die Kartusche (1) wurde dabei auf 30°C temperiert. Anschließend wurde die Kartusche mit 500µl Waschpuffer 2 (2xSSC) mit gleicher Flussrate und Temperatur gespült. Am Ende des Spülprozesses blieb die Probenkammer (500) mit Waschpuffer 2 gefüllt. Die fluidischen Anschlüsse wurden durch Bewegen des Schiebers (1100) aus der Probenkammer (500) entfernt.

Die Detektion der Hybridisierungssignale erfolgte in Waschpuffer 2 (2xSSC) unter einem Zeiss Fluoreszenzmikroskop (Zeiss, Jena, Deutschland). Die Anregung erfolgte im Auflicht mit einer Weißlichtquelle und einem für Cyanine 3 geeigneten Filtersatz. Die Signale wurden mit einer CCD-Kamera (PCO-Sensicam, Kehlheim, Deutschland) aufgezeichnet. Die Belichtungszeit betrug 5000ms. (Abb. 10). Beschreibungen der Abbildungen

### Abbildung 1

Darstellung der zusammengebauten Kartusche (1) bestehend aus zwei Haltervorrichtungen (101 und 102), Medienanschlussseite (120) mit Datamatrix (600), Antireflexionsstruktur (109) und Schnapphaken (106) an der Medienanschlussseite. Weiterhin sind Passstiftlöcher (108) dargestellt.

### Abbildung 2

Darstellungen der einzelnen Komponenten der Kartusche (1) in einer Explosionszeichnung. Im oberen Teil des Bildes sind eine Haltereinrichtung (102), in der Mitte die Kerneinheit (500), bestehend aus Bodenelement (400), Zwischenelement (300) und Deckelelement (200), im unteren Teil des Bildes die zweite Haltervorrichtung (101) zu sehen.

### Abbildung 3

Darstellung der Kartusche (1) angeschlossen an den Stecker (1000).

### Abbildung 4

Darstellung des Steckers (1000) mit Beschriftung der Kartuschen-Anschlussleiste.

### Abbildung 5

Übersichtsdarstellung der Öffnung des Reaktionsraums (301) durch Kanülen (1201) mittels eines Schiebers.

### Abbildung 6

Detaildarstellung der Öffnung des Reaktionsraums (301) durch Kanülen (1201), die durch das Dichteseptum (300) stechen und in dem Reaktionsraum (301) einen Einlass (1202) und einen Auslass (1203) bilden. Die Kanülen werden durch die Führungsnase (1103) am Schieber (1100) und die Kanülenführung (113) in der Kartusche (1) zur Probenkammer positioniert.

### Abbildung 7

Darstellung der BefüHstation (2000) mit eingesetzter Injektionsspritze (2401), aufgesetztem Deckel (2200) und eingesetzter Kartusche (1). Die Befüllstation (2000) steht, gehalten durch Magnete, auf dem Befüllstations-Fuß (2300).

### Abbildung 8

Darstellung des Grundkörpers (2100) der Befüllstation mit eingesetzter Injektionsspritze (2401) mit Kanüle (2402) und Entlüftungskanüle (2403).

### Abbildung 9

Aufnahme eines Elektrophoresegels. Auf Bahn A wurde die Massenreferenz DNA (alle 100 Basenpaare ein Fragment) aufgetragen, auf Bahn B und D die PCR-Produkte, die in einem konventionellen Thermocycler erzeugt wurden und auf den Bahnen C und E die PCR-Produkte, die in der Kartusche erzeugt wurden. Es wurde genomische DNA aus *Corynebacterium glutamicum* amplifiziert. Das Amplifikationsprodukt weist eine Länge von ca. 500 Basenpaaren auf. Aus Abbildung 9 wird deutlich, dass die Kartusche (1) zur Amplifikation von DNA mittels PCR verwendet werden kann und in ihrer Effizienz einem konventionellen Thermocycler äquivalent ist.

### Abbildung 10

Analyse der in Beispiel 2 durchgeführten PCR-Reaktion. Intensive Hybridiserungssignale werden nur an den Spots detektiert, die mit der zummarkierten Strang der PCR perfekt komplementären P1-Sequenz belegt waren.

### Bezugszeichenliste

- 1: Kartusche
- 101: oberes Halterelement
- 102: unteres Halterelement
- 103: Aussparung zur Aufnahme einer Nase/Schiebers
- 104: Sichtfenster
- 105: Mediumanschluss für Kühlflüssigkeiten
- 106: Schnapphaken
- 108: Passstiftlöcher
- 403: Kontakte für Heizelement
- 120: Medienanschlussseite
- 109: Antireflexionsstruktur
- 600: Datamatrix
- 117: Kühlkanalauslass
- 118: Widerlager
- 400: Bodenelement mit integriertem Heizer/Sensorsubstrat
- 401: Träger des integrierten Heizer/Sensorsubstrates
- 402: optisch durchlässige Aussparung
- 403: Kontakte für Heizer/Sensorsubstrat
- 404: Kontakte für Heizer/Sensorsubstrat
- 300: dichtendes, elastisches, wiederholbar durchstechbares Zwischenelement
- 301: umschlossene Aussparung in 300, definiert Reaktionsraum
- 302: Dehnleisten
- 304: Justierohren
- 200: Deckelelement
- 202: deckelndes Trägerelement
- 201: Substanzbibliothek bzw. Substanzbibliothek tragender Chip
- 500: Kerneinheit bzw. Kammer bzw. Reaktionskammer bzw. Probenkammer
- 105: Kühlkanal
- 109: Schnapphaken
- 110: Schnapphaken
- 111: Aussparung für Heiz/Sensorsubstratkontakte (403)
- 112: Kühlmitteleinlass
- 116: Kühlmittelauslass
- 117: Kühlmitteleinlass
- 115: Presspassung
- 1000: Stecker
- 1100: Schieber
- 1103: Führungsnase
- 1001: Passstiftlöcher
- 1002: Befestigungslöcher
- 1206: Elektrokabel
- 1207: Elektroanschluss
- 1202: Befüllschläuche
- 1210: Schieberschubstange
- 1211: Gewinde
- 1212: Dämpfung
- 1204: Kühlmittelschlauch
- 1205: Kühlmittelanschluss
- 1300: Kühlkanal
- 1201: Einstechkanülen
- 2000: Handbefüllstation
- 2106: Schnellverschlussstecker
- 2401: Einwegspritze
- 2404: Kanüle
- 2403: Entlüftungskanüle
- 2402: Spitze einer Kanüle
- 2403: Spitze einer Kanüle
- 2100: Handbefüllstation-Grundkörper
- 2200: Handbefüllstation-Deckel
- 2101: Griffmulde
- 2102: Griffmulde

## Patentansprüche

1. Vorrichtung (1) zur Halterung eines Substanzbibliotheken-Trägers, umfassend zwei miteinander fixierbare Halterelemente (101 und 102), die einen Schichtverbund bestehend aus
(i) einem Deckelelement (200), das auf seiner Unterseite eine Detektionsfläche mit einer Substanzbibliothek (201) aufweist und das mindestens im Bereich der Detektionsfläche optisch durchlässig ist,
(ii) einem dichtenden und eine umschlossene Aussparung aufweisenden Zwischenelement (300) und
(iii) einem mindestens im Bereich der Detektionsfläche des Deckelelements optisch durchlässigen Bodenelement (400)
bilden, wodurch eine optisch durchlässige Kammer (500) mit einem Kammerraum entsteht.

2. Vorrichtung ( 1 ) nach Anspruch 1,
**dadurch gekennzeichnet, dass** das Bodenelement (400) eine integrierte Heiz-Temperatursensor-Vorrichtung umfasst.

3. Vorrichtung (1) nach Anspruch 1 oder 2,
**dadurch gekennzeichnet, dass** das Bodenelement (400) aus Borofloat 33, Quarzglas, einkristallinem CaF₂ und/oder einkristallinem Silizium besteht.

4. Vorrichtung (1) nach einem der vorangehenden Ansprüche,
**dadurch gekennzeichnet, dass** das Deckelelement (200) aus Glas, Borofloat 33, Quarzglas, einkristallinem CaF₂, einkristallinem Silizium, Phenylmethylmethacrylat und/oder Polycarbonat besteht.

5. Vorrichtung (1) nach einem der vorangehenden Ansprüche,
**dadurch gekennzeichnet, dass** das Zwischenelement (300) elastisch und mit Kanülen wiederholbar seitlich durchstechbar ist und dass beim Herausziehen der Kanülen der Kammerraum dicht verschlossen bleibt.

6. Vorrichtung (1) nach einem der vorangehenden Ansprüche,
**dadurch gekennzeichnet, dass** das Zwischenelement (300) aus Polydimethylsiloxan (erhältlich unter den Bezeichnungen Sylgard 184 oder 182), aus Naturkautschuk, Butadien-Kautschuk, Chloropren-Kautschuk, Nitril-Butadien-Kautschuk, Butyl-Kautschuk, Isopren-Styrol-Kautschuk, Polynorbornen-Kautschuk, Ethylen-Propylen-Kautschuk, Fluor-Kautschuk (erhältlich unter den Bezeichnungen Biton, Tecnolflon, Fluorel, Daiel), Perfluor-Kautschuk (erhältlich unter der Bezeichnung Klarez), Methyl-Phenyl-Silicon-Kautschuk, Methyl-Vinyl-Silicon-Kautschuk, Methyl-Fluor-Silicon-Kautschuk, Fluor-Silicon-Kautschuk, Polysulfid-Kautschuk, Urethan-Kautschuk, Polyester- oder Polyetherprepolymeren auf der Basis von 4,4'-Methylendi(phenylisothiocyanat) und Toluoldüsocyanat (erhältlich unter den Bezeichnungen Adipren, Elastothane, Genthane, Urepan, Vibrathan) besteht

7. Vorrichtung (1) nach einem der vorangehenden Ansprüche,
**dadurch gekennzeichnet, dass** die Aussparung (301) des Zwischenelements die geometrische Form des Kammerraums definiert.

8. Vorrichtung (1) nach einem der vorangehenden Ansprüche,
**dadurch gekennzeichnet, dass** der Kammerraum (301) luftblasenfrei befüllbar ist.

9. Vorrichtung (1) nach einem der vorangehenden Ansprüche,
**dadurch gekennzeichnet, dass** der durch das Zwischenelement (300) definierte Kammerraum (301) eine D- oder Neumond- oder Sichel-förmige Gestalt aufweist.

10. Vorrichtung (1) nach einem der vorgehenden Ansprüche,
**dadurch gekennzeichnet, dass** die durch das Deckelelement (200), das Zwischenelement (300) und das Bodenelement (400) gebildete Kammer (500) kühlbar ist.

11. Vorrichtung (1) nach einem der vorhergehenden Ansprüche,
**dadurch gekennzeichnet, dass** es sich bei den beiden Halterelementen (101 und 102) um ineinandergreifende Halbschalen handelt, die beim Zusammendrücken durch Presspassung (115) zusammengehalten werden.

12. Vorrichtung (1) nach einem der vorhergehenden Ansprüche,
**dadurch gekennzeichnet, dass** die zusammengefügten Halterelemente (101 und 102) über Kanäle (105) zur Kühlung der Kammer (500) verfügen.

13. Vorrichtung (1) nach einem der vorhergehenden Ansprüche,
**dadurch gekennzeichnet, dass** die zusammengefügten Halterelemente (101 und 102) über eine Aussparung (103) zur Aufnahme eines Schiebers (1100) oder Nase (1103) zum Beladen der Probenkammer (500) verfügen.

14. Vorrichtung (1) nach einem der vorhergehenden Ansprüche,
**dadurch gekennzeichnet, dass** Medienanschlüsse zum Beheizen (403) der Kammer (500), zur Kühlung (105) der Kammer (500) und Aussparungen (103) zur Aufnahme einer Injektionsapparatur auf einer Seite der Vorrichtung gelagert (120) sind.

15. Vorrichtung (1) nach einem der vorhergehenden Ansprüche,
**dadurch gekennzeichnet, dass** die Vorrichtung auf einen Stecker (1000) aufsteckbar ist.

16. Vorrichtung (1) nach einem der vorhergehenden Ansprüche,
**dadurch gekennzeichnet, dass** die Vorrichtung vollautomatisch über einen Stecker (1000) betreibbar ist.

17. Vorrichtung (1) nach einem der vorhergehenden Ansprüche,
**dadurch gekennzeichnet, dass** die Vorrichtung auf eine manuelle Beladungsstation (2000) aufsteckbar ist.

18. Vorrichtung (1) nach einem der vorhergehenden Ansprüche,
**dadurch gekennzeichnet, dass** es sich bei der Substanzbibliothek (201) um eine Proteinbibliothek handelt.

19. Vorrichtung (1) nach Anspruch 18,
**dadurch gekennzeichnet, dass** es sich bei der Proteinbibliothek um eine Antikörperbibliothek, eine Rezeptorproteinbibliothek oder eine Membranproteinbibliothek handelt.

20. Vorrichtung (1) nach einem der Ansprüche 1 bis 17,
**dadurch gekennzeichnet, dass** es sich bei der Substanzbibliothek (201) um eine Peptidbibliothek handelt.

21. Vorrichtung (1) nach Anspruch 20,
**dadurch gekennzeichnet, dass** sich bei der Peptidbibliothek um eine Rezeptorlegantenbibliothek, eine Bibliothek pharmakologisch aktiver Peptide oder eine Bibliothek von Peptidhormonen handelt.

22. Vorrichtung (1) nach einem der Ansprüche 1 bis 17,
**dadurch gekennzeichnet, dass** es sich bei der Substanzbibliothek (201) um eine Nukleinsäurebibliothek handelt.

23. Vorrichtung nach Anspruch 22,
**dadurch gekennzeichnet, dass** es sich bei der Nukleinsäurebibliothek um eine DNS-Molekülbibliothek handelt.

24. Vorrichtung nach Anspruch 22,
**dadurch gekennzeichnet, dass** es sich bei der Substanzbibliothek um eine RNS-Molekülbibliothek handelt.

25. Verwendung einer Vorrichtung (1) nach einem der Ansprüche 1 bis 17 zur Durchführung von Micro-Array basierten Tests.

26. Verwendung einer Vorrichtung (1) nach einem der Ansprüche 1 bis 17 zur Durchführung von Hybridisierungstests.

27. Verwendung einer Vorrichtung (1) nach einem der Ansprüche 1 bis 17 zur Durchführung einer PCR, einer LCR oder LDR.

28. Verwendung einer Vorrichtung nach einem der Ansprüche 1 bis 17 zur gleichzeitigen Durchführung eines Micro-Array basierten Tests und einer PCR.

29. Vorrichtung (2000) zum Befüllen einer Vorrichtung (1) nach einem der Ansprüche 1 bis 22 , **dadurch gekennzeichnet**,
(i) dass die Vorrichtung (2000) aus einem Grundkörper (2100) und einem mit dem Grundkörper fixierbaren Deckel (2200) besteht, wobei der Grundkörper (2100) Aussparungen für eine Befülleihheit, eine Entlüftungseinheit und für eine Vorrichtung (1) nach einem der Ansprüche 1 bis 22 enthält
(ii) und die Aussparungen so angeordnet sind, dass die Probenkammer (500) der Vorrichtung (1) nach einem der Ansprüche 1 bis 22 durch seitliches Durchstechen des Zwischenelements (300) beladen und entlüftet werden kann.

30. Vorrichtung (2000) nach Anspruch 29,
**dadurch gekennzeichnet, dass** es sich bei der Befülleinheit um eine Spritze (2401) mit Kanüle (2402) und bei der Entlüftungseinheit um eine Kanüle (2403) handelt.

## Claims

1. Device (1) for holding a substance library carrier,
comprising two holding elements (101 and 102), that are fixable with each other, and that form a layer composite consisting of
(i) a lid element (200) having a detection surface with a substance library (201) on its underneath side and being optically translucent at least in the area of the detection surface,
(ii) a sealing intermediate element (300) having an enclosed recess and
(iii) a base element (400) being optically translucent at least in the area of the detection surface of the lid element,
together forming an optically translucent chamber (500) having a chamber space.

2. Device (1) according to claim 1,
**characterized in that** the base element (400) comprises an integrated heating-temperature sensor device.

3. Device (1) according to claim 1 or 2,
**characterized in that** the base element (400) consists of Borofloat 33, silica glass, monocrystalline CaF₂ and/or monocrystalline silicon.

4. Device (1) according to any of the preceding claims,
**characterized in that** the lid element (200) consists of glass, Borofloat 33, quartz glass, monocrystalline CaF₂, monocrystalline silicon, phenylmethylmethacrylate and/or polycarbonate.

5. Device (1) according to any one of the preceding claims,
**characterized in that** the intermediate element (300) is elastic and can be repeatedly punctured from the side by cannulae and that the chamber space remains sealingly closed upon extraction of the cannulae.

6. Device (1) according to any of the preceding claims,
**characterized in that** the intermediate element (300) consists of polydimethyl siloxane (available under the names Sylgard 184 or 182), of natural rubber, butadiene rubber, chloroprene rubber, nitrile butadiene rubber, butyl rubber, isoprene-styrene rubber, polynorbornene rubber, ethylene-proplyene rubber, fluor rubber (available under the names Biton, Tecnolflon, Fluorel, Daiel), perfluor rubber (available under the name Klarez), methyl-phenyl-silicon rubber, methyl-vinyl-silicon rubber, methyl-fluor-silicon rubber, fluor-silicon rubber, polysulfid rubber, urethane rubber, polyester or polyether prepolymers on the basis of 4,4'-methylenedi(phenylisothiocyanate) and toluenediisocyanate (available under the names Adipren, Elastothane, Genthane, Urepan, Vibrathan).

7. Device (1) according to any of the preceding claims,
**characterized in that** the recess (301) of the intermediate element defines the geometrical form of the chamber space.

8. Device (1) according to any one of the preceding claims,
**characterized in that** the chamber space (301) may be filled free of air bubbles.

9. Device (1) according to any one of the preceding claims,
**characterized in that** the chamber space (301) defined by the intermediate element (300) is formed in the shape of a D, a new moon or a sickle.

10. Device (1) according to any one of the preceding claims,
**characterized in that** the chamber (500) formed by the lid element (200), the intermediate element (300) and the base element (400) may be cooled.

11. Device (1) according to any one of the preceding claims,
**characterized in that** the two holding elements (101 and 102) are half shells engaging with one another and which are held together by press-fit (115) when pressed together.

12. Device (1) according to any one of the preceding claims,
**characterized in that** the holding elements (101 and 102) which are engaged with each other have channels (105) for cooling the chamber (500).

13. Device (1) according to any one of the preceding claims,
**characterized in that** the holding elements (101 and 102) which are engaged with each other have a recess (103) for receiving a slide (1100) or lug (1103) for loading the sample chamber (500).

14. Device (1) according to any one of the preceding claims,
**characterized in that** media connections for heating (403) of the chamber (500), for cooling (105) of the chamber (500) and recesses (103) for receiving an injection apparatus are located on one side (120) of the device.

15. Device (1) according to any one of the preceding claims,
**characterized in that** the device may be attached to a connector (1000).

16. Device (1) according to any one of the preceding claims,
**characterized in that** the device may be operated fully automatically through a connector (1000).

17. Device (1) according to any one of the preceding claims,
**characterized in that** the device may be attached to a manual filling station (2000).

18. Device (1) according to any one of the preceding claims,
**characterized in that** the substance library (201) is a protein library.

19. Device (1) according to claim 18,
**characterized in that** the protein library is an antibody library, a receptor protein library or a membrane protein library.

20. Device (1) according to any one of claims 1 to 17,
**characterized in that** the substance library (201) is a peptide library.

21. Device (1) according to claim 20,
**characterized in that** the peptide library is a receptor ligand library, a library of pharmacologically active peptides or a library of peptide hormones.

22. Device (1) according to any one of claims 1 to 17,
**characterized in that** the substance library (201) is a nucleic acid library.

23. Device according to claim 22,
**characterized in that** the nucleic acid library is a DNA molecule library.

24. Device according to claim 22,
**characterized in that** the substance library is an RNA molecule library.

25. Use of a device (1) according to any one of claims 1 to 17 for carrying out microarray-based tests.

26. Use of a device (1) according to any one of claims 1 to 17 for carrying out hybridization tests.

27. Use of a device (1) according to any one of claims 1 to 17 for carrying out a PCR, an LCR or LDR.

28. Use of a device according to any one of claims 1 to 17 for simultaneously carrying out a microarray-based test and a PCR.

29. Device (2000) for filling a device (1) according to any one of claims 1 to 22,
**characterized in that**
(i) the device (2000) consists of a body (2100) and a cover (2200) fixable to the body, wherein the body (2100) contains recesses for the filling unit, a ventilation unit and a device (1) according to any one of claims 1 to 22
(ii) and that the recesses are arranged in such a way that the sample chamber (500) of the device (1) according to any one of claims 1 to 22 may be loaded and vented through puncturing of the intermediate element (300) from the side.

30. Device (2000) according to claim 29,
**characterized in that** the filling unit is a syringe (2401) with a cannula (2402) and that the ventilation unit is a canula (2403).

## Revendications

1. Dispositif (1) de maintien d'un support de bibliothèques de substances comprenant deux éléments de maintien (101 et 102) pouvant être fixés l'un à l'autre, qui forment un composé en couches se composant de
(i) un élément couvercle (200) qui présente en son côté inférieur une surface de détection avec une bibliothèque de substances (201) et qui, au moins dans la zone de la surface de détection, est optiquement perméable,
(ii) un élément intermédiaire (300) étanchéisant et présentant un évidement enserré et
(iii) un élément de fond (400) optiquement perméable au moins dans la zone de la surface de détection de l'élément couvercle
ce par quoi une chambre optiquement perméable (500) avec un espace de chambre se constitue.

2. Dispositif (1) selon la revendication 1,
**caractérisé en ce que** l'élément de fond (400) comprend un dispositif intégré de chauffage et capteur de température.

3. Dispositif (1) selon la revendication 1 ou 2,
**caractérisé en ce que** l'élément de fond (400) se compose de Borofloat 33, de verre de quartz, de CaF₂ monocristallin et/ou de silicium monocristallin.

4. Dispositif (1) selon l'une quelconque des revendications précédentes,
**caractérisé en ce que** l'élément couvercle (200) se compose de verre, de Borofloat 33, de verre de quartz, de CaF₂ monocristallin, de silicium monocristallin, de phénylméthylméthacrylate et/ou de polycarbonate.

5. Dispositif (1) selon l'une quelconque des revendications précédentes,
**caractérisé en ce que** l'élément intermédiaire (300) est élastique et peut être transpercé latéralement avec des canules et de façon pouvant être répétée et que lors de l'extraction des canules l'espace de chambre demeure fermé de manière étanche.

6. Dispositif (1) selon l'une quelconque des revendications précédentes,
**caractérisé en ce que** l'élément intermédiaire (300) se compose de polydiméthylsiloxane (disponible sous les noms de Sylgard 184 ou 182), de caoutchouc naturel, de caoutchouc de butadiène, de caoutchouc de chloroprène, de caoutchouc de butadiène nitrile, de caoutchouc de butyle, de caoutchouc de styrole isoprène, de caoutchouc de polynorbornène, de caoutchouc de polypropylène éthylène, de caoutchouc de fluor (disponible sous les noms de Biton, Tecnolflon, Fluorel, Daiel), de caoutchouc de perfluor (disponible sous le nom de Klarez), de caoutchouc de silicone phényle méthyle, de caoutchouc de silicone vinyle méthyle, de caoutchouc de silicone fluor méthyle, de caoutchouc de silicone fluor, de caoutchouc polysulfide, de caoutchouc d'uréthane, de prépolymères de polyester ou de polyéther sur la base de 4,4'-méthylènedi(phénylisothiocyanate) et de toluoldiisocyanate (disponible sous les noms de Adipren, Elastothane, Genthane, Urepan, Vibrathan).

7. Dispositif (1) selon l'une quelconque des revendications précédentes,
**caractérisé en ce que** l'évidement (301) de l'élément intermédiaire définit la forme géométrique de l'espace de chambre.

8. Dispositif (1) selon l'une quelconque des revendications précédentes,
**caractérisé en ce que** l'espace de chambre (301) peut être rempli sans bulles d'air.

9. Dispositif (1)-selon l'une quelconque des revendications précédentes,
**caractérisé en ce que** l'espace de chambre (301) défini par l'élément intermédiaire (300) présente une silhouette en forme de D ou de nouvelle lune ou de faucille.

10. Dispositif (1) selon l'une quelconque des revendications précédentes,
**caractérisé en ce que** la chambre (500) formée par l'élément couvercle (200), l'élément intermédiaire (300) et l'élément de fond (400) peut être refroidie.

11. Dispositif (1) selon l'une quelconque des revendications précédentes,
**caractérisé en ce que**, dans le cas des deux éléments de maintien (101 et 102), il s'agit de demi-coquilles s'engageant l'une dans l'autre, qui, lorsqu'elles sont pressées l'une contre l'autre, sont maintenues ensemble par ajustage serré (115).

12. Dispositif (1) selon l'une quelconque des revendications précédentes,
**caractérisé en ce que** les éléments de maintien assemblés ensemble (101 et 102) disposent de canaux (105) pour le refroidissement de la chambre (500).

13. Dispositif (1) selon l'une quelconque des revendications précédentes,
**caractérisé en ce que** les éléments de maintien assemblés ensemble (101 et 102) disposent d'un évidement (103) de réception d'une coulisse (1100) ou d'un nez (1103) pour le chargement de la chambre à échantillons (500).

14. Dispositif (1) selon l'une quelconque des revendications précédentes,
**caractérisé en ce que** des raccordements de milieux pour chauffer (403) la chambre (500), pour refroidir (105) la chambre (500) et des évidements (103) pour recevoir un appareil d'injection sont logés sur un côté (120) du dispositif.

15. Dispositif (1) selon l'une quelconque des revendications précédentes,
**caractérisé en ce que** le dispositif peut être enfiché sur une fiche (1000).

16. Dispositif (1) selon l'une quelconque des revendications précédentes,
**caractérisé en ce que** le dispositif peut être exploité entièrement automatiquement par une fiche (1000).

17. Dispositif (1) selon l'une quelconque des revendications précédentes,
**caractérisé en ce que** le dispositif peut être enfiché sur une station manuelle de chargement (2000).

18. Dispositif (1) selon l'une quelconque des revendications précédentes,
**caractérisé en ce que**, dans le cas de la bibliothèque de substances (201), il s'agit d'une bibliothèque de protéines.

19. Dispositif (1) selon la revendication 18,
**caractérisé en ce que** dans le cas de la bibliothèque de protéines, il s'agit d'une bibliothèque d'anticorps, d'une bibliothèque de protéines de récepteur ou d'une bibliothèque de protéines de membrane.

20. Dispositif (1) selon l'une quelconque des revendications 1 à 17,
**caractérisé en ce que** dans le cas de la bibliothèque de substances (201), il s'agit d'une bibliothèque de peptides.

21. Dispositif (1) selon la revendication 20,
**caractérisé en ce que** dans le cas de la bibliothèque de peptides il s'agit d'une bibliothèque de ligands de récepteur, d'une bibliothèque de peptides pharmacologiquement actifs ou d'une bibliothèque d'hormones de peptide.

22. Dispositif (1) selon l'une quelconque des revendications 1 à 17,
**caractérisé en ce que** dans le cas de la bibliothèque de substances (201), il s'agit d'une bibliothèque d'acides nucléiques.

23. Dispositif (1) selon la revendication 22,
**caractérisé en ce que** dans le cas de la bibliothèque d'acides nucléiques, il s'agit d'une bibliothèque de molécules d'ADN.

24. Dispositif (1) selon la revendication 22,
**caractérisé en ce que** dans le cas de la bibliothèque de substances, il s'agit d'une bibliothèque de molécules d'ARN.

25. Utilisation d'un dispositif (1) selon l'une quelconque des revendications 1 à 17 pour réaliser des tests basés sur micro-réseau.

26. Utilisation d'un dispositif (1) selon l'une quelconque des revendications 1 à 17 pour réaliser des tests d'hybridation.

27. Utilisation d'un dispositif (1) selon l'une quelconque des revendications 1 à 17 pour réaliser une PCR, une LCR ou LDR.

28. Utilisation d'un dispositif (1) selon l'une quelconque des revendications 1 à 17 pour réaliser simultanément un test basé sur micro-réseau et une PCR.

29. Dispositif (2000) pour remplir un dispositif (1) selon l'une quelconque des revendications 1 à 22, **caractérisé en ce que**
(i) le dispositif (2000) se constitue d'un corps de base (2100) et d'un couvercle (2200) pouvant être fixé au corps de base, le corps de base (2100) comportant des évidements pour une unité de remplissage, une unité de désaération et pour un dispositif (1) selon l'une quelconque des revendications 1 à 22
(ii) et les évidements sont disposées de manière telle que la chambre à échantillons (500) du dispositif (1) selon l'une quelconque des revendications 1 à 22 peut être chargée et désaérée par transpercement latéral de l'élément intermédiaire (300).

30. Dispositif (2000) selon la revendication 29,
**caractérisé en ce qu'**il s'agit, dans le cas de l'unité de remplissage, d'une seringue (2401) avec canule (2402) et, dans le cas de l'unité de désaération, d'une canule (2403).
